# EUROPEAN PATENT APPLICATION

(11) **EP 4 700 897 A1**
(43) Date of publication of application: **25.02.2026**
(21) Application number: 25195445.9
(22) Date of filing: 12.08.2025
(51) Int. Cl.: H01M 10/058, H01M 50/528, H01M 50/536, H01M 50/54, H01M 50/55, H01M 50/562

(54) **SECONDARY BATTERY AND METHOD OF MANUFACTURING THE SAME**

(30) Priority: 13.08.2024 KR 20240108531; 25.03.2025 KR 20250037653; 11.08.2025 KR 20250110947
(71) Applicant: LG Energy Solution, Ltd., Seoul 07335 (KR)
(72) Inventor: PARK, Sang Joon, Daejeon 34122 (KR); DO, Jin Uk, Daejeon 34122 (KR); LEE, Hyun Hee, Daejeon 34122 (KR)
(74) Representative: Goddar, Heinz J.

(57) **Abstract**

Disclosed herein is a secondary battery and a method of manufacturing a secondary battery. The secondary battery according to the present disclosure comprises an electrode assembly comprising an electrode portion, and a plurality of first electrode tabs and a plurality of second electrode tabs that are formed at a first side of the electrode portion. The secondary battery further comprises a current collector placed at the first side of the electrode portion, and comprising a first current collecting portion connected to the plurality of first electrode tabs and a second current collecting portion connected to the plurality of second electrode tabs. The plurality of first electrode tabs are bent in a first direction toward and connected onto an upper surface of the first current collecting portion of the current collector facing away from the electrode portion. The plurality of second electrode tabs are bent toward and connected onto an upper surface of the second current collecting portion of the current collector facing away from the electrode portion, wherein the plurality of second electrode tabs are bent in a direction opposite to the first direction in which the first electrode tabs are bent. The plurality of first electrode tabs and the plurality of second electrode tabs may be spaced apart from each other at least in a second direction perpendicular to the first direction.

## Description

### CROSS-REFERENCE TO RELATED APPLICATION

The present application claims priority to and the benefit of Korean Patent Application Nos. 10-2024-0108531 and 10-2025-0037653, respectively filed on August 13, 2024 and March 25, 2025, in the Korean Intellectual Property Office, the entire disclosure of which is incorporated herein by reference.

### TECHNICAL FIELD

The present disclosure relates to a secondary battery and a method of manufacturing the secondary battery, and more particularly, to a secondary battery and a method of manufacturing the secondary battery, in which a plurality of first electrode tabs (e.g., first foil tabs) and a plurality of second electrode tabs (e.g., second foil tabs) are respectively connected (e.g., welded) to a first current collecting portion and a second current collecting portion of a current collector.

### BACKGROUND

Recently, as the demand for portable electronic devices has rapidly increased and the development of electric vehicles, energy storage batteries, robots, satellites, and the like has become more active, intensive research has been conducted on high-performance secondary batteries capable of repeated charging and discharging.

Secondary batteries may be classified, according to the shape of a battery casing, into a can-type secondary battery, in which an electrode assembly may be embedded in a rigid housing (e.g., a metal can), and a pouch-type secondary battery, in which an electrode assembly may be embedded in a pouch formed of a sheet (e.g., an aluminum laminate sheet). The can-type secondary battery may also be classified into a cylindrical secondary battery and a prismatic secondary battery according to the shape of the rigid housing (e.g., the metal can).

### SUMMARY

In secondary batteries, an electrode tab (e.g., a foil tab) of an electrode assembly and a current collector may be coupled to each other, for example by welding. When coupling/welding the electrode tab and the current collector, the electrode tab may be bent in a bending direction, for example to increase a contact area between the electrode tab and the current collector. The current collector may be seated on an upper portion of the electrode tab and then coupled/welded thereto.

However, in this case, there may be a risk that a separator may be damaged during a process of coupling and in particular welding the current collector and the electrode tab placed under the current collector. In addition, as the capacity of the secondary battery increases, the number of electrode tabs that may have to be coupled/welded at once may increase, and thus, there may be a risk that electrode tabs spaced far from the current collector may not be properly coupled/welded.

Accordingly, there is a need to develop a secondary battery that reduces or eliminates the risk of damaging the separator and/or enables stable welding of a large number of electrode tabs to the current collector.

An object of the present disclosure is to provide a secondary battery and a method of manufacturing the secondary battery, which can prevent an influence on an electrode assembly when an electrode tab is coupled to a current collector.

An object of the present disclosure is to provide a secondary battery and a method of manufacturing the secondary battery, in which a large number of electrode tabs can be reliably coupled (e.g., welded) to the current collector when the electrode tabs are coupled/welded to the current collector.

An object of the present disclosure is to provide a secondary battery and a method of manufacturing the secondary battery, in which a plurality of electrode tabs and a current collector may be welded such that none of the plurality of electrode tabs remain unwelded.

An object of the present disclosure is to provide a secondary battery and a method of manufacturing the secondary battery, in which interference between different electrode tab assemblies/plurality of electrode tabs that are welded to the current collector may be prevented from occurring.

A secondary battery according to a first, second, third and fourth aspect and a method of manufacturing a secondary battery are provided. Any feature or combination(s) of features described herein with regard to the secondary battery according to the present disclosure (e.g., according to any one of the first, second, third and fourth aspect) may also be present for the method according to the present disclosure, and vice-versa. Any feature or combination(s) of features described herein with regard to the secondary battery according to one of the first, second, third and fourth aspects may also be present for the secondary battery according to any other one of the first, second, third and fourth aspects, and vice-versa. For the sake of brevity and to avoid unnecessary repetition, certain feature(s) or combination(s) of features may therefore only be described once with regard to the method or the secondary battery (and there, e.g., with regard to only one of the first, second, third and fourth aspects), but may likewise apply to the other one of the method and the secondary battery and/or to the secondary battery according any other one of the first, second, third and fourth aspects. The secondary battery according to any one of the embodiments described herein may for example be manufactured using the method of manufacturing a secondary battery according to any one of the embodiments described herein.

In the following, a secondary battery according to the first aspect of the present disclosure is described. According to the first aspect, a secondary battery according to an embodiment of the present disclosure may include an electrode assembly and a current collector. The electrode assembly may include an electrode portion, and a plurality of first electrode tabs (e.g., first foil tabs) and a plurality of second electrode tabs (e.g., second foil tabs) that are formed at a first side (e.g., on one end) of the electrode portion. The current collector may be placed at the first side (e.g., on an upper portion) of the electrode portion, and may include a first current collecting portion connected (e.g., welded) to the plurality of first electrode tabs, and a second current collecting portion connected (e.g., welded) to the plurality of second electrode tabs. Optionally, the current collector may include a connection portion located between the first current collecting portion and the second current collecting portion, wherein the connection portion may be provided with a current collecting protrusion in some examples. The plurality of first electrode tabs may be bent in one direction (first direction, which may also be referred to as bending direction) toward and connected (e.g., welded) to the first current collecting portion of the current collector (e.g., to an upper surface of the first current collecting portion of the current collector facing away from the electrode portion). The plurality of second electrode tabs may be bent toward and connected (e.g., welded) to the second current collecting portion of the current collector (e.g., to an upper surface of the second current collecting portion of the current collector facing away from the electrode portion) in a direction opposite to the one direction (first direction) in which the first electrode tabs are bent.

In some examples, the plurality of first electrode tabs and the plurality of second electrode tabs may optionally be spaced apart from each other at least in a second direction

(which may also be referred to as displacement direction) perpendicular to the first direction.

The secondary battery may be configured to be charged and discharged. The secondary battery may be a can type secondary battery, in particular a prismatic secondary battery.

The secondary battery may include a casing (also referred to as case or battery casing/case). The casing may accommodate (or be configured to accommodate) the electrode assembly therein.

The casing may for example be made of (e.g., comprise or consist of) a rigid material, in particular a metal material. The casing may have a prismatic shape (i.e., have, at least substantially, the shape of a prism), in particular a quadrilateral (quadrangular) prismatic (e.g., parallelepiped) shape such as a rectangular prismatic shape (i.e., have, at least substantially, the shape of a rectangular cuboid).

The casing may have an opening (e.g., an open end or surface), for example for inserting the electrode assembly into the case. The opening may be formed at at least one side (e.g., surface) of the case. In some examples, the opening may extend over the entire side (e.g., the entire top or top surface) of the case.

The secondary battery may include a cap (which may, e.g., be embodied as a cap plate) that covers or is configured to cover (e.g., seal(s)) the opening of the casing. The cap may be part of a cap assembly, which may for example further comprise an electrode terminal (e.g., for electrically contacting the secondary battery from the outside), one or more sealing members such as gaskets and/or one or more insulating members (e.g., for insulating the electrode terminal from the cap and/or the cap from the electrode assembly and/or current collector).

As used herein, directions, orientations and similar geometric terms may be defined relative to the secondary battery (e.g., the casing and/or the electrode assembly thereof), in particular relative to the electrode tabs and/or the current collector (which may for example be arranged at a same side of the electrode assembly and secondary battery as the opening of the case and/or the cap/cap assembly).

For example, a side or surface of the electrode assembly and/or of the secondary battery (e.g., the casing thereof) at or adjacent to which the current collector (and/or the electrode tabs) is arranged (which may, e.g., be the side or surface of the secondary battery in which the opening is formed and/or where the cap/cap assembly is arranged) may be referred to as an upper or top side/surface, respectively, of the electrode assembly and secondary battery, respectively. A side or surface of the electrode assembly and/or of the secondary battery (e.g., the casing thereof) opposite to the side or surface at or adjacent to which the current collector (and/or the electrode tabs) is arranged may be referred to as a lower or bottom side and surface, respectively. Other spatially relative terms (such as below, above, etc.) and/or spatially relative terms with regard to other elements, structures or the like may be used in this sense (or reference frame).

For example, a side or surface of an element, structure or the like facing in the same (or substantially the same) direction as the upper side or surface of the electrode assembly and/or of the secondary battery may be referred to as an upper (or top) side and surface, respectively, of the respective element/structure. A side or surface of an element, structure or the like facing in the same (or substantially the same) direction as the bottom side or surface of the electrode assembly and/or of the secondary battery may be referred to as a bottom (or lower) side and surface, respectively, of the respective element/structure.

A direction from the lower side or surface of the electrode assembly and/or of the secondary battery to the upper side or surface of the electrode assembly and/or of the secondary battery (e.g., towards the current collector) may be referred to as a vertical direction (or height direction) or vertically. A direction perpendicular to the vertical direction (e.g., parallel to the upper side or surface) may be referred to as a horizontal direction or horizontally. It is, however, to be noted that these terms are not intended to imply any particular orientation or direction with respect to the direction of gravity or other entities (such as a device that the secondary battery is used in) as this may depend on the orientation of the secondary battery (and/or the device) in space, which may vary depending on use and state of the battery.

Additionally or alternatively, a side or surface of an element, structure or the like facing towards an inside of the battery case may for example be referred to as an inner side and surface, respectively, of the respective element/structure and a side or surface of an element, structure or the like facing towards an outside of the battery case may be referred to as an outer side and surface, respectively, of the respective element. A direction towards an inside of the battery case may be referred to as an inward direction or inwards and a direction towards an outside of the battery case may be referred to as an outward direction or outwards.

A direction of smallest extent (e.g., a short or minor axis) of the electrode assembly and/or of the secondary battery in a plane perpendicular to the vertical direction may be referred to as a width direction of the electrode assembly and/or of the secondary battery. A direction of a long or major axis of the electrode assembly and/or of the secondary battery in a plane perpendicular to the vertical direction (e.g., a direction of a long side or edge and/or a direction of largest extent of the electrode assembly and/or of the secondary battery in a plane perpendicular to the vertical direction) may be referred to as a longitudinal or length direction. The width direction may for example coincide with a stacking direction of the electrode assembly. The longitudinal direction may or may not be perpendicular to the width direction.

As used herein, two directions or elements being substantially perpendicular may for example refer to the directions and elements, respectively, being (e.g., extending or projecting) at an angle of between 70° and 110°, in some examples between 80° and 100°, in one example between 85° and 95° and in one example between 88° and 92° to each other. As used herein, two directions or elements being substantially parallel (or being/extending in substantially the same direction) may for example refer to the directions and elements, respectively, being (e.g., extending or projecting) at an (acute) angle of between -20° and 20°, in some examples between -10° and 10°, in one example between -5° and 5° and in one example between -2° and 2° to each other.

The electrode assembly may be a stacked and/or wound electrode assembly, wherein the electrode portion may, e.g., be formed by stacking and/or winding one or more electrode members (which may also be referred to as electrode plates and may for example be embodied as electrode sheets or respective portions of a same (e.g., wound or Z-stacked) electrode sheet or plate). Apart from the first and second electrode tabs, the electrode assembly is not particularly limited and may for example be embodied as is known in the art.

The plurality of first electrode tabs may also be referred to as the first plurality of electrode tabs or, in particular in case the first electrode tabs are pre-welded to one another, as the first electrode tab assembly. The plurality of second electrode tabs may also be referred to as the second plurality of electrode tabs or, in particular in case the first electrode tabs are pre-welded to one another, as the second electrode tab assembly.

The plurality of first electrode tabs and the plurality of second electrode tabs may serve to provide an electrical connection to (e.g., be in direct contact with) the electrode portion and in particular the one or more electrode members (e.g., electrode sheets) therein. For example, each of the first and second electrode tabs may be electrically connected to (e.g., be in direct contact with) an electrode member (e.g., an electrode sheet or a respective portion of a same electrode sheet), in particular a respective electrode member. In some examples, some or all of the first and second electrode tabs may be integrally formed with the electrode portion (e.g., the respective electrode member thereof). Additionally or alternatively, some or all of the first and second electrode tabs may be formed separate from the electrode portion (e.g., the respective electrode member thereof), for example as a separate electrode tab piece that is connected (e.g., attached and/or welded) to the electrode portion (e.g., the respective electrode member thereof).

Preferably, some or all of the first and second electrode tabs are embodied as a foil tab (which may, e.g., be formed by cutting an electrode plate or a portion thereof).

The plurality of first electrode tabs and the plurality of second electrode tabs may be associated with a same polarity (e.g., a positive or negative polarity). For example, the first and second electrode tabs may be electrically connected to a same electrode member and/or to electrode members having a same polarity.

The plurality of first electrode tabs and the plurality of second electrode tabs are formed at (e.g., on) a first side (e.g., a first end) of the electrode portion, which may also be referred to as the upper side or end of the electrode portion (or of the electrode assembly). The first side of the electrode portion may face the opening of the battery case/the cap of the secondary battery. The plurality of first electrode tabs and the plurality of second electrode tabs may for example protrude from the first side of the electrode portion, e.g., towards the current collector (e.g., a bottom surface thereof) and/or the cap of the secondary battery.

Some or all of the first electrode tabs and/or of the second electrode tabs may extend parallel or substantially parallel to the second direction and/or perpendicular or substantially perpendicular to the first direction.

The current collector may be configured to pass current (e.g., provide a conductive path) from the electrode assembly (e.g., the electrode tabs), for example to an electrode terminal of the secondary battery (which may be an external terminal of the secondary battery for electrically connecting to the secondary battery from the outside). The current collector may be configured to collect the current from the first and second pluralities of electrode tabs (e.g., pass current from each of the electrode tabs, for example to the electrode terminal).

The current collector (e.g., the respective current collecting portion thereof) may be in direct contact with the first and second pluralities of electrode tabs (e.g., with no other elements arranged therebetween, for example with the electrode tabs being welded directly to the current collection member). The current collector may be in direct contact with the electrode portion (e.g., the first side thereof) or may be spaced apart (spatially separated from/not in contact with) the electrode portion, e.g., spatially separated therefrom by portions of the first and/or second plurality of electrode tabs arranged therebetween.

The current collection member (e.g., the protrusion thereof described below) may be electrically connected to the electrode terminal either directly (in direct contact, e.g., with no intermediate elements arranged therebetween) or indirectly (e.g., via one or more connecting members, for example be in direct contact with a connecting member, which may at the same time serve as a fastening member (for example for fastening the electrode terminal to the cap), which in turn may be in direct contact with the electrode terminal).

The current collector is placed at (e.g., on) the first side (upper side) of the electrode portion, for example seated on the first side of the electrode portion and/or on at least a portion of the first and/or second pluralities of electrode tabs (e.g., a lower portion thereof coupling to the electrode portion).

The current collector comprises a first current collection portion that is (e.g., directly) connected to the plurality of first electrode tabs. The current collector further comprises a second current collection portion that is (e.g., directly) connected to the plurality of second electrode tabs. One or both of the first and second current collection portions may for example be welded or otherwise directly or indirectly coupled (e.g., joined with or attached to) the respective plurality of electrode tabs. One or both of the first and second current collection portions may have a plate shape, e.g., a rectangular plate shape.

The plurality of first electrode tabs are bent (e.g., curved or deformed) in a first direction, which may coincide with the width direction and/or the stacking direction of the electrode assembly. The plurality of first electrode tabs may be bent toward and connected (e.g., welded) onto an upper surface of the first current collecting portion of the current collector facing away from the electrode portion. The plurality of first electrode tabs may for example be bent around a side surface of the first current collecting portion extending between the upper surface and a bottom surface of the first current collecting portion facing towards the electrode portion. In some examples, the plurality of first electrode tabs (e.g., some or all of the first electrode tabs) may be in contact with the bottom surface of the first current collecting portion facing towards the electrode portion and/or the side surface of the first current collecting portion extending between the bottom and upper surfaces thereof. The plurality of first electrode tabs may or may not be connected (e.g., welded) to the bottom and/or side surfaces of the first current collecting portion.

The plurality of second electrode tabs are bent (e.g., curved or deformed) in a direction opposite to the first direction (e.g., in the negative first direction), i.e., the first and second electrode tabs are bent in opposite directions. As used herein, two directions or elements being opposite may for example refer to the directions and elements, respectively, being (e.g., extending or projecting) at an angle of between 135° and 225°, in some examples between 150° and 210°, in some examples between 160° and 200°, in one example between 170° and 190° and in one example between 175° and 185°.

The plurality of second electrode tabs may be bent toward and connected (e.g., welded) onto an upper surface of the second current collecting portion of the current collector facing away from the electrode portion. The plurality of second electrode tabs may for example be bent around a side surface (e.g., an edge surface) of the second current collecting portion extending between the upper surface and a bottom surface of the second current collecting portion facing towards the electrode portion (wherein said side surface of the second current collecting portion may be opposite to the side surface of the first current collection portion around which the plurality of first electrode tabs may be bent). In some examples, the plurality of second electrode tabs (e.g., some or all of the second electrode tabs) may be in contact with the bottom surface of the second current collecting portion facing towards the electrode portion and/or the side surface of the second current collecting portion extending between the bottom and upper surfaces thereof. The plurality of second electrode tabs may or may not be connected (e.g., welded) to the bottom and/or side surfaces of the second current collecting portion.

The plurality of first electrode tabs and the plurality of second electrode tabs (e.g., centers thereof and/or sides, edges and/or corners thereof) may be spaced apart from each other at least in a second direction (displacement direction) perpendicular to the first direction (bending direction). The second direction may coincide with a longitudinal direction of the electrode assembly and/or may be perpendicular to a stacking direction of the electrode assembly.

The plurality of first electrode tabs and the plurality of second electrode tabs may not overlap along the second direction (e.g., as seen along the first direction) in some examples. The plurality of first electrode tabs and the plurality of second electrode tabs may be separated from each other by a gap. A (second) separation distance between the plurality of first electrode tabs and the plurality of second electrode tabs (across the gap, e.g., the shortest connection between said pluralities of second electrode tabs) along the second direction (e.g., the second direction component of the vector connecting said plurality of electrode tabs) may be greater than zero. The (second) separation distance may for example be at least 5%, in some examples at least 10%, in some examples at least 20% and in one example at least 30% of a length of the plurality of first electrode tabs and/or a length of the plurality of second electrode tabs along the second direction.

In the secondary battery according to an embodiment of the present disclosure, the electrode portion may include a plurality of first electrode members (also referred to as first electrode plates) formed with the first electrode tabs (e.g., the first foil tabs) at a first position (e.g., along the second direction), and a plurality of second electrode plates formed with the second electrode tabs (e.g., the second foil tabs) at a second position (e.g., along the second direction).

The first electrode members/plates may for example be embodied as an electrode sheets and/or as portions of a same (e.g., wound or stacked, in particular Z-stacked) electrode sheet. The second electrode members/plates may for example be embodied as an electrode sheets and/or as portions of a same (e.g., wound or stacked, in particular Z-stacked) electrode sheet. In some examples, one or more (e.g., all) of the first electrode members and one or more (e.g., all) of the second electrode members may be portions of a same (e.g., wound or stacked, in particular Z-stacked) electrode sheet. Some or all of the first electrode members and/or of the second electrode members may extend parallel or substantially parallel to the second direction.

The first electrode members/plates may be formed with the first electrode tabs, e.g., be provided with and/or connected to the first electrode tabs and in particular be integrally formed with the first electrode tabs (e.g., by cutting from a same sheet). The second electrode members/plates may be formed with the second electrode tabs, e.g., be provided with and/or connected to the second electrode tabs and in particular be integrally formed with the second electrode tabs (e.g., by cutting from a same sheet).

The first position and the second position may relate to corresponding points of the plurality of first electrode tabs and the plurality of second electrode tabs (e.g., a center thereof or a corresponding side, edge or corner thereof). The first and second positions may be displaced from each other along the second direction, e.g., by at least the length of the plurality of first electrode tabs and/or the length of the plurality of second electrode tabs along the second direction.

The first electrode plates and the second electrode plates may have the same polarity (e.g., a positive polarity or a negative plurality).

The current collector may electrically connect the first electrode plates and the second electrode plates to each other and/or to a same electrode terminal of the secondary battery.

The plurality of first electrode tabs and the plurality of second electrode tabs may be spaced apart from each other in the first direction and in the second direction (i.e., in addition to being spaced part from each other in the second direction may also be spaced apart from each other in the second direction). The plurality of first electrode tabs and the plurality of second electrode tabs may for example be spaced apart from each other (e.g., along the shortest connecting line) in a direction at an angle to both the first direction and the second direction (for example be spaced apart from each other diagonally, e.g., in both the width direction and the longitudinal direction of the electrode assembly). In other examples, the plurality of first electrode tabs and the plurality of second electrode tabs may be aligned with each other in the first direction.

The plurality of first electrode tabs and the plurality of second electrode tabs may or may not overlap along the first direction (e.g., as seen along the second direction). The plurality of first electrode tabs and the plurality of second electrode tabs may be separated from each other by a gap. A (first) separation distance between the plurality of first electrode tabs and the plurality of second electrode tabs (across the gap, e.g., the shortest connection between said pluralities of electrode tabs) along the first direction (e.g., the first direction component of the vector connecting said plurality of electrode tabs) may be zero or greater than zero. The (first) separation distance may for example be at least 0.1%, in some examples at least 0.5%, in some examples at least 1%, in one example at least 2% and in one example at least 5% of a width of the plurality of first electrode tabs and/or a width of the plurality of second electrode tabs along the first direction.

In the secondary battery according to an embodiment of the present disclosure, the plurality of first electrode tabs (e.g., first foil tabs) and the plurality of second electrode tabs (e.g., second foil tabs) may be spaced apart from each other in a width direction and a longitudinal direction of the electrode assembly.

The plurality of first electrode tabs may extend at (e.g., on and/or across) the upper surface of the first current collecting portion (facing away from the electrode portion) across at least 50%, preferably at least 75%, most preferably at least 90% of a width of the current collector in the first current collecting portion and in one example across the entire width of the current collector in the first current collecting portion (wherein the width may be measured along the first direction), e.g., so as to cover the respective portion of the width of the current collector in the first current collecting portion.

Additionally or alternatively, the plurality of second electrode tabs may extend at (e.g., on and/or across) the upper surface of the second current collecting portion across at least 50%, preferably at least 75%, most preferably at least 90% of the width of the current collector in the second current collecting portion and in one example across the entire width of the current collector in the second current collecting portion (wherein the width may be measured along the first direction), e.g., so as to cover the respective portion of the width of the current collector in the second current collecting portion.

The plurality of first electrode tabs may extend at the upper surface of the first current collecting portion so as to cover between 5% and 20%, preferably between 7.5% and 15%, most preferably between 1/12 and 1/8 of a surface area of the upper surface of the current collector (e.g., the base thereof). In other examples, the plurality of first electrode tabs may extend at the upper surface of the first current collecting portion so as to cover between 10% and 40%, in some examples between 15% and 30%, in one example between 1/6 and 1/4 of the surface area of the upper surface of the current collector (e.g., the base thereof).

Additionally or alternatively, the plurality of second electrode tabs may extend at the upper surface of the second current collecting portion so as to cover between 5% and 20%, preferably between 7.5% and 15%, most preferably between 1/12 and 1/8 of a surface area of the upper surface of the current collector (e.g., the base thereof). In other examples, the plurality of second electrode tabs may extend at the upper surface of the second current collecting portion so as to cover between 10% and 40%, in some examples between 15% and 30%, in one example between 1/6 and 1/4 of the surface area of the upper surface of the current collector (e.g., the base thereof)

The plurality of first electrode tabs and the plurality of second electrode tabs may extend at the upper surface of the first and second current collecting portion, respectively, so as to (collectively) cover between 10% and 40%, preferably between 15% and 30%, most preferably between 1/6 and 1/4 of the surface area of the upper surface of the current collector (e.g., the base thereof), for example so as to allow for sufficient bonding while reducing the amount of tab melting. In other examples, the plurality of first electrode tabs and the plurality of second electrode tabs may extend at the upper surface of the first and second current collecting portion, respectively, so as to (collectively) cover between 20% and 80%, preferably between 30% and 60%, most preferably between 1/3 and 1/2 of the surface area of the upper surface of the current collector (e.g., the base thereof). Additionally or alternatively, the plurality of first electrode tabs and the plurality of second electrode tabs may extend at the upper surface of the first and second current collecting portion, respectively, so as to (collectively) cover at least 40%, in some examples at least 50%, in some examples at least 60%, in some examples at least 70%, in one example at least 80% and in one example at least 90% of the surface area of the upper surface of the current collector (e.g., the base thereof).

In some examples, the first current collecting portion may welded, e.g., by laser welding and/or ultrasonic welding, to the plurality of first electrode tabs, for example in one or more welding areas, e.g., as detailed below. The first current collecting portion may welded to some or all of the first electrode tabs.

Additionally or alternatively, the second current collecting portion may be welded, e.g., by laser welding and/or ultrasonic welding, to the plurality of second electrode tabs, for example in one or more welding areas, e.g., as detailed below. The second current collecting portion may welded to some or all of the second electrode tabs.

In the secondary battery according to an embodiment of the present disclosure, the plurality of first electrode tabs (e.g., first foil tabs) may be pre-welded to one another among the first electrode tabs.

For example, the plurality of first electrode tabs may have been pre-welded to one another among the first electrode tabs (e.g., welding some or all of the first electrode tabs to each other) prior to connecting (e.g., welding) the first current collecting portion to the plurality of first electrode tabs. Put differently, the plurality of first electrode tabs may already be pre-welded to one another when being connected to the first current collecting portion. This may for example improve a degree of connection (e.g., an electric conductivity) between the first electrode tabs and thereby to the first current collecting portion. The pre-welding may manifest in the presence of pre-welding areas, e.g., as described below.

Additionally or alternatively, the plurality of second electrode tabs (e.g., second foil tabs) may be pre-welded to one another among the second electrode tabs.

For example, the plurality of second electrode tabs may have been pre-welded to one another among the second electrode tabs (e.g., welding some or all of the second electrode tabs to each other) prior to connecting (e.g., welding) the second current collecting portion to the plurality of second electrode tabs.

The plurality of first electrode tabs may have been pre-welded to one another at one or more (first) pre-welding areas (in which, e.g., some or all of the first electrode tabs may be welded to each other). The first pre-welding areas may collectively form (and/or be arranged in) a first assembly weld portion (or a plurality of first assembly weld portions), e.g., as described below.

The first current collecting portion may be welded to the plurality of first electrode tabs at one or more (first) welding areas (in which the first current collecting portion may, e.g., be welded to some or all of the first electrode tabs). The first welding areas may collectively form (and/or be arranged in) a first current collector weld portion (or a plurality of first current collector weld portions), e.g., as described below. The first welding areas may (collectively) extend over (e.g., cover) between 5% and 50%, preferably between 10% and 25%, most preferably between 15% and 20% of a surface area of the current collector that is covered by (and/or in contact with) the plurality of first electrode tabs.

At least parts of the one or more first pre-welding areas may not overlap with (e.g., may be spaced apart from and/or may not be merged with) any of the one or more first welding areas (for example when seen perpendicular to the first and second directions and/or along the vertical direction).

In some examples, some or all of the one or more first pre-welding areas may extend perpendicularly or substantially perpendicularly to the one or more first welding areas. For example, some or all of the first pre-welding areas may extend parallel or substantially parallel to the second direction (and/or the length direction of the electrode assembly) and some or all of the first welding areas may extend parallel or substantially parallel to the first direction (and/or the width direction and/or stacking direction of the electrode assembly). In other examples, some or all of the one or more first pre-welding areas may extend parallel or substantially parallel to the one or more first welding areas.

Additionally or alternatively, the plurality of second electrode tabs may have been pre-welded to one another at one or more (second) pre-welding areas (in which, e.g., some or all of the second electrode tabs may be welded to each other). The second pre-welding areas may collectively form (and/or be arranged in) a second assembly weld portion (or a plurality of second assembly weld portions), e.g., as described below.

The second current collecting portion may be welded to the plurality of second electrode tabs at one or more (second) welding areas (in which the second current collecting portion may, e.g., be welded to some or all of the second electrode tabs). The second welding areas may collectively form (and/or be arranged in) a second current collector weld portion (or a plurality of second current collector weld portions), e.g., as described below. The second welding areas may (collectively) extend over (e.g., cover) between 5% and 50%, preferably between 10% and 25%, most preferably between 15% and 20% of a surface area of the current collector that is covered by (and/or in contact with) the plurality of second electrode tabs.

At least parts of the one or more second pre-welding areas may not overlap with (e.g., may be spaced apart from and/or may not be merged with) any of the one or more second welding areas (for example when seen perpendicular to the first and second directions and/or along the vertical direction).

In some examples, some or all of the one or more second pre-welding areas may extend perpendicularly or substantially perpendicularly to the one or more second welding areas. For example, some or all of the second pre-welding areas may extend parallel or substantially parallel to the second direction (and/or the length direction of the electrode assembly) and some or all of the second welding areas may extend parallel or substantially parallel to the first direction (and/or the width direction and/or stacking direction of the electrode assembly). In other examples, some or all of the one or more second pre-welding areas may extend parallel or substantially parallel to the one or more second welding areas.

In one example, some or all of the second pre-welding area(s) may extend parallel or substantially parallel to some or all of the first pre-welding area(s). Additionally or alternatively, some or all of the second welding area(s) may extend parallel or substantially parallel to some or all of the second welding area(s).

Some or all of the first pre-welding area(s) and/or some or all of the second pre-welding area(s) may be arranged at (e.g., on) the upper surface of the first and second current collecting portion, respectively, of the current collector.

One or both of the first and second pre-welding area(s) may for example be embodied as (straight and/or curved) welding lines (e.g., elongate welding areas) and/or welding spots (e.g., welding points). Additionally or alternatively, one or both of the first and second welding area(s) may for example be embodied as (straight and/or curved) welding lines (e.g., elongate welding areas) and/or welding spots (e.g., welding points).

One or both of the plurality of first electrode tabs and the plurality of second electrode tabs may comprise a pre-welded portion (which in some examples may comprise at least some of the aforementioned first and second pre-welding area(s), respectively). In the pre-welded portion, the respective plurality of electrode tabs (i.e., the plurality of first and second electrode tabs, respectively) may have been pre-welded to one another (e.g., welding some or all of the first and second electrode tabs, respectively, to each other). The pre-welded portion may be arranged along (e.g., on and/or adjacent to) a side surface (e.g., an edge surface) of the first and second current collecting portion, respectively (around which the respective electrode tabs may for example be bent). Additionally or alternatively, the pre-welded portion may be arranged between the electrode portion and a bottom surface of the first and second current collecting portion, respectively (e.g., on and/or adjacent to the bottom surface of the respective current collecting portion). The pre-welded portion (or a part thereof) may for example be arranged in the first-2 assembly portion and second-2 assembly portion, respectively, as introduced below.

In the secondary battery according to an embodiment of the present disclosure, the first current collecting portion and/or the second current collecting portion may be arranged in the current collector in the longitudinal direction of the electrode assembly.

The first current collecting portion and/or the second current collecting portion (e.g., a major axis and/or a long edge thereof) may extend in the second direction (and/or the longitudinal direction of the electrode assembly).

In the secondary battery according to an embodiment of the present disclosure, the current collector may be placed between the plurality of first electrode tabs (first foil tabs) and the plurality of second electrode tabs (e.g., second foil tabs), for example along the first/bending direction (e.g., as seen along the second/displacement direction).

The plurality of first electrode tabs may be arranged at (e.g., bent around) a first side (e.g., a first side surface) of the current collector and the plurality of second electrode tabs are arranged at (e.g., bent around) a second side (e.g., a second side surface) of the current collector. The second side may be opposite to the first side (e.g., along the first direction).

In the secondary battery according to an embodiment of the present disclosure, a protective member (e.g., an insulator) may be placed under the current collector.

A protective member may for example be placed between the electrode portion and the current collector (e.g., one or both of the first and second current collecting portions thereof and, optionally, a connection portion thereof, e.g., as described below).

The protective member may for example be embodied as a protective layer (e.g., a film and/or a plate). Additionally or alternatively, the protective member may be or comprise an insulator (e.g., a thermal insulator and/or an electrical insulator). The protective member (e.g., the insulator) may serve to thermally and/or electrically insulate the current collector from the electrode portion and, optionally, the plurality of first electrode tabs and/or the plurality of second electrode tabs (e.g., to protect the electrode portion during welding). In one example, the insulator may extend across (e.g., cover) the entire bottom surface of the current collector.

In the secondary battery according to an embodiment of the present disclosure, the current collector (e.g., one or both of the first and second current collecting portions) may have a thickness ranging from 0.5 mm to 3.0 mm.

The current collector may comprise a connection portion located between the first current collecting portion and the second current collecting portion (e.g., along the second direction). The connection portion may be integrally formed with one or both of the first and second current collecting portions. In one example, the entire current collector (e.g., also including the optional current collector protrusion described below) may be integrally formed (e.g., as a single piece). The connection portion and one or both of the first and second current collecting protrusions may be portions (e.g., segments) of a common current collector base (e.g., a plate or slab). The current collector base may be a uniform structure (e.g., with a uniform thickness and/or width), i.e., the connection portion and said one or both of the first and second current collecting protrusion may not necessarily be structurally separated and/or distinct from each other but may (only) be defined by their arrangement with respect to the plurality of first electrode tabs and the plurality of second electrode tabs and, optionally, the current collecting protrusion introduced below.

Additionally or alternatively, the current collector may comprise an edge portion located between one of the first current collecting portion and the second current collecting portion and an edge (e.g., a short edge) of the current collector opposite to the respective current collection portion (e.g., such that the edge portion is arranged between said edge and the respective current collecting portion).

In some examples, the current collector, in particular the connection portion or the edge portion thereof, may be provided with a protrusion (also referred to as current collector protrusion or current collecting protrusion). The current collector protrusion may protrude from the current collector (e.g., the connection portion or the edge portion), e.g. from the upper surface thereof. The current collector protrusion may be for electrically connecting the current collector to an electrode terminal, for example through the cap of the secondary battery. The current collector protrusion may extend towards and, optionally, (partially or entirely) through the cap of the secondary battery. The current collector protrusion may be directly connected to (e.g., be in direct contact with) the electrode terminal or indirectly connected to the electrode terminal (e.g., via one or more intermediate connecting members).

In the secondary battery according to an embodiment of the present disclosure, the current collecting protrusion may be formed of the same material as one or both of the first current collecting portion and the second current collecting portion.

The current collector protrusion may be integrally formed with one or both of the first current collecting portion and the second current collecting portion. In one example, the entire current collector may be integrally formed (e.g., as a single piece).

In other examples, the current collector protrusion may be formed as a separate piece (e.g., separate from one or both of the first current collecting portion and, optionally, also separate from the connection portion). The current collector protrusion may be connected (e.g., welded or otherwise coupled or attached) to the current collector, e.g., to the connecting portion and/or to the common current collector base.

In the secondary battery according to an embodiment of the present disclosure, the current collecting protrusion may be formed of a material different from that of the first current collecting portion and/or a material of the second current collecting portion. Additionally or alternatively, the current collecting protrusion may be formed of a material different from that of the connecting portion.

In the secondary battery according to an embodiment of the present disclosure, the electrode portion may include one or more separators. The one or more separators may for example be located between the plurality of first electrode members/plates and/or between the plurality of second electrode members/plates, respectively.

The one or more separators may for example serve to separate the plurality of first electrode members/plates and/or the plurality of second electrode members/plates from each other and/or from electrode members/plates of a different polarity.

Additionally or alternatively, the electrode assembly may be formed by stacking and/or winding the plurality of first electrode members/plates, the plurality of second electrode members/plates, and, optionally, the separators.

The secondary battery may comprise an electrode terminal. The electrode terminal may for example be an external terminal for electrically contacting the secondary battery from the outside. The electrode terminal may be electrically connected to the current collector, in particular by the current collector protrusion (e.g., as described below). Thereby, the electrode terminal may be electrically connected to the plurality of first electrode tabs and the plurality of second electrode tabs.

A hole, in particular a through hole, may be formed in the electrode terminal (e.g., in a bottom surface thereof facing towards the current collector/the electrode assembly).

The current collector protrusion may be arranged in (e.g., inserted into) the hole of the electrode terminal. The current collector protrusion may extend through the electrode terminal, e.g., so as to be exposed at an upper (e.g., outer) surface thereof facing away from current collector/the electrode assembly). The current collector protrusion may be flush with the upper surface of the current collector protrusion and/or may be recessed therefrom.

Put differently, in the secondary battery according to an embodiment of the present disclosure, a through hole may be formed in the electrode terminal. The current collecting protrusion may be inserted into the through hole of the electrode terminal.

The secondary battery according to an embodiment of the present disclosure may further include a casing and a cap assembly. The casing may have an opening (e.g., one open end). The casing may accommodate the electrode assembly therein. The cap assembly may be coupled to the one open end of the casing. The cap assembly may include an electrode terminal (e.g., as described above) electrically connected to the current collector (e.g., the current collector protrusion).

The cap assembly may further comprise a cap (e.g., a cap plate), which may cover the opening in the casing. The electrode terminal may be arranged at (e.g., on) an outer surface of the cap. The electrode terminal may be fastened to the cap, e.g., by a fastening member such as a rivet. In some examples, the fastening member may additionally be configured to receive the current collector protrusion (e.g., in a hollow or opening formed in the fastening member) and/or to electrically connect the current collector (e.g., the current collector protrusion) to the electrode terminal (e.g., by being in direct contact with both the current collector and the electrode terminal).

In some examples, the secondary battery may comprise a cover (e.g., an insulating cover) covering (preferably fully covering) one or both of an upper surface of the plurality of first electrode tabs (facing away from the first current collecting portion) and an upper surface of the plurality of first electrode tabs (facing away from first current collecting portion). The cover may for example be arranged between the respective plurality of electrode tabs and the cap. The cap may for example be U-shaped, e.g., so as to extend onto side surfaces of the electrode assembly. In some examples, the cover may be separated by a gap from one or both of the upper surface of the current collector and the upper surface of the electrode assembly. The cover may fully cover (but in some examples not be in contact with) the current collector except for a portion thereof in which the current collection protrusion is arranged (e.g., the connection or edge portion). The cover may extend up to the current collection protrusion, e.g., so as to be in contact with the current collection protrusion. In one example, the cover comprises a first cover member covering (preferably fully covering) the upper surface of the plurality of first electrode tabs and a second cover member covering (preferably fully covering) the upper surface of the plurality of first electrode tabs.

A method of manufacturing a secondary battery according to an embodiment of the present disclosure may include preparing (e.g. providing and, optionally, forming and/or manufacturing) an electrode assembly including an electrode portion, and a plurality of first electrode tabs (e.g., first foil tabs) and a plurality of second electrode tabs (e.g., second foil tabs) that are formed at a first side (e.g., on one end, which may for example be the upper side or upper end as defined above) of the electrode portion (which may also be referred to as a preparation operation). Optionally, the method may include welding (e.g., pre-welding) the plurality of first electrode tabs to one another among the first electrode tabs, and/or welding (e.g., pre-welding) the plurality of second electrode tabs to one another among the second electrode tabs (which may also be referred to as a primary welding or pre-welding operation). The method further includes placing a current collector (e.g., at the first side of the electrode portion) between the plurality of first electrode tabs (that may optionally be primarily welded/pre-welded) and the plurality of second electrode tabs (that may optionally be primarily welded/pre-welded). This step may also be referred to as a current collector displacement (or placement) operation. The method further includes bending the plurality of first electrode tabs (e.g. in a bending direction, which may also be referred to as the first direction) onto an upper surface of a first current collecting portion of the current collector (wherein the upper surface may for example face away from the electrode portion), and bending the plurality of second electrode tabs (e.g., in a direction opposite to the bending direction, for example in the negative bending direction) onto an upper surface of a second current collecting portion of the current collector (wherein the upper surface may for example face away from the electrode portion). These steps may also be referred to as a bending operation. The bending direction may for example be perpendicular to the displacement direction as defined below). The method further includes connecting (e.g., welding) the plurality of first electrode tabs to the first current collecting portion, and connecting (e.g., welding) the plurality of second electrode tabs to the second current collecting portion (which may also be referred to as a secondary connecting (or welding) operation).

In some examples, the plurality of first electrode tabs and the plurality of second electrode tabs may optionally be spaced apart from each other at least in a displacement direction (which may also be referred to as the second direction), e.g., as described above for the secondary battery according to then present disclosure.

The electrode assembly, the electrode portion, the plurality of first electrode tabs and/or the plurality of second electrode tabs may for example be embodied as described above for the secondary battery according to the present disclosure.

The current collector may for example be embodied as described above for the secondary battery according to the present disclosure. The current collector may for example be placed (e.g., arranged) between the plurality of first electrode tabs and the plurality of second electrode tabs along the bending direction. The current collector may be placed such that the plurality of first electrode tabs and the plurality of second electrode tabs are arranged on opposite sides (e.g., the first and second sides referred to below) of the current collector (for example opposite long sides extending along a long/major axis of the current collector).

The plurality of first electrode tabs may be bent around a first side (e.g., a first side surface) of the current collector and the plurality of second electrode tabs may be bent around a second side (e.g., a second side surface) of the current collector. The second side may be opposite to the first side (e.g., along the first direction).

In some example, the plurality of first electrode tabs and the plurality of second electrode tabs may be spaced apart from each other in both the displacement direction (second direction) and the bending direction (first direction), e.g., as described above for the secondary battery according to the present disclosure.

One or both of the plurality of first electrode tabs and the plurality of second electrode tabs may be connected to the first and second current collecting portion, respectively, by welding, for example by laser welding and/or ultrasonic welding. The plurality of first electrode tabs and/or the plurality of second electrode tabs may for example be welded to the first and second current collecting portion, respectively, in one or more (first and second, respectively) welding areas, e.g., as described above for the secondary battery according to the present disclosure.

In some examples, the method may comprise a pre-welding (or primary welding) operation. The pre-welding operation may comprise pre-welding the plurality of first electrode tabs to one another among the first electrode tabs (e.g., such that some or all of the first electrode tabs are welded to each other). The pre-welding of the first electrode tabs may be performed prior to connecting (e.g., welding) the first current collecting portion to the plurality of first electrode tabs. The plurality of first electrode tabs may for example be pre-welded to one another in one or more (first) pre-welding areas, e.g., as described above for the secondary battery according to the present disclosure.

Additionally or alternatively, the pre-welding operation may comprise pre-welding the plurality of second electrode tabs to one another among the second electrode tabs (e.g., such that some or all of the second electrode tabs are welded to each other. The pre-welding of the second electrode tabs may be performed prior to connecting (e.g., welding) the second current collecting portion to the plurality of second electrode tabs. The pre-welding of the first and second electrode tabs may for example be performed in a same welding process (e.g., simultaneously at least in part). The plurality of second electrode tabs may for example be pre-welded to one another in one or more (second) pre-welding areas, e.g., as described above for the secondary battery according to the present disclosure.

One or both of the plurality of first electrode tabs and the plurality of second electrode tabs may be pre-welded prior to placing the current collector between the plurality of first electrode tabs and the plurality of second electrode tabs (e.g., prior to the current collector displacement (or placement) operation).

Additionally or alternatively, one or both of the plurality of first electrode tabs and the plurality of second electrode tabs may be pre-welded in a state where the respective electrode tabs protrude (e.g., freely) from the electrode portion, for example perpendicular or substantially perpendicular to the bending and displacement direction and/or parallel or substantially parallel to the vertical direction.

In one example, one or both of the plurality of first electrode tabs and the plurality of second electrode tabs may be pre-welded by ultrasonic welding, whereas the welding of one or both of the plurality of first electrode tabs and the plurality of second electrode tabs to the respective current collecting portion may be by laser welding.

In some examples, the method may further comprise cutting the plurality of first electrode tabs to a same length (e.g., after pre-welding the plurality of first electrode tabs to one another) and/or cutting the plurality of second electrode tabs to a same length (e.g., after pre-welding the plurality of second electrode tabs to one another). Said length may for example be a length as measured from the electrode portion, e.g., a length by which the respective electrode tabs extend and/or protrude from the electrode portion. Said length may for example be between 5 mm and 50 mm, in some examples between 10 mm and 25 mm.

In the method of manufacturing the secondary battery according to an embodiment of the present disclosure, the plurality of first electrode tabs (e.g., first foil tabs) and the plurality of second electrode tabs (e.g., second foil tabs) may be associated with (e.g., have) the same polarity. For example, the first and second electrode tabs may be electrically connected to a same electrode member and/or to electrode members having a same polarity. In the method of manufacturing the secondary battery according to an embodiment of the present disclosure, the current collector may be provided such that the first current collecting portion and the second current collecting portion are arranged in a longitudinal direction of the electrode assembly, e.g., as described above for the secondary battery according to the present disclosure.

In the method of manufacturing the secondary battery according to an embodiment of the present disclosure, a protective member (e.g., an insulator) may be placed under the current collector.

A protective member (e.g., an insulator) may for example be placed between the current collector and the electrode portion, e.g., as described above for the secondary battery according to the present disclosure. The protective member may be embodied as described for the secondary battery according to the present disclosure, e.g., as a protective layer.

The current collector may include a protrusion (referred to as current collector protrusion or current collecting protrusion), e.g., as described above for the secondary battery according to the present disclosure. The current collector protrusion may for example be provided between the first current collecting portion and the second current collecting portion (e.g., in a connection portion of the current collector provided therebetween). The current collector protrusion may be for electrically connecting the current collector to an electrode terminal.

The current collector protrusion may be formed of a material different from a material of the first current collecting portion and/or a material of the second current collecting portion, e.g., as described above for the secondary battery according to the present disclosure.

Additionally or alternatively, the collector protrusion may be formed of a same material as one or both of the first current collecting portion and the second current collecting portion, e.g., as described above for the secondary battery according to the present disclosure. In particular, the protrusion may be integrally formed with one or both of the first current collecting portion and the second current collecting portion.

In the method of manufacturing the secondary battery according to an embodiment of the present disclosure, the current collector may include a current collecting protrusion provided between the first current collecting portion and the second current collecting portion and formed of a material different from that of the first current collecting portion and the second current collecting portion or formed of the same material as the first current collecting portion and the second current collecting portion.

The secondary battery according to the first aspect and/or the method of manufacturing a secondary battery according the present disclosure may further comprise any feature or combination of features as described herein for the secondary battery according to the second, third and/or fourth aspect, and vice-versa, and/or any feature or combination of features as described below for the particular embodiments in the detailed description.

In the following, a secondary battery according to the second aspect of the present disclosure is described. According to the second aspect, a secondary battery according to an embodiment of the present disclosure may include a plurality of first electrode members (also referred to as first electrode plates) each including a first electrode tab (e.g., a first foil tab).

The secondary battery according to an embodiment of the present disclosure may include a plurality of second electrode members (also referred to as second electrode plates) each including a second electrode tab (e.g., a second foil tab) The plurality of second electrode members may have the same polarity as the plurality of first electrode members.

The secondary battery according to an embodiment of the present disclosure may include an electrode assembly comprising the plurality of first electrode members and the plurality of second electrode members. The electrode assembly may for example be formed by stacking the plurality of first electrode members and the plurality of second electrode members, The electrode assembly may have a width in a first direction (width direction) and a length in a second direction (length direction) perpendicular to the first direction.

The secondary battery according to an embodiment of the present disclosure may include a terminal (electrode terminal) for connecting the electrode assembly to an external device.

The secondary battery according to an embodiment of the present disclosure may include a current collector including a first current collecting portion, a second current collecting portion (e.g., spaced apart from the first current collecting portion), and optionally a current collecting protrusion formed between the first current collecting portion and the second current collecting portion. The current collecting protrusion may be connected to the terminal.

According to an embodiment of the present disclosure, the respective first electrode tabs of the plurality of first electrode members may be bent in the first direction (bending direction) and connected (e.g., welded) to the first current collecting portion (e.g., an upper surface thereof). The respective second foil tabs of the plurality of second electrode members may be bent in the first direction (e.g., in a direction opposite to the bending of the first electrode tabs) and connected (e.g., welded) to the second current collecting portion (e.g., an upper surface thereof). The current collecting protrusion may be located between the first electrode tabs and the second electrode tabs (e.g., protrude from the upper surface of the current collector).

The secondary battery according to an embodiment of the present disclosure may include a first electrode tab assembly (e.g., first foil tab assembly) formed by coupling the respective first electrode tabs (e.g., first foil tabs) of the plurality of first electrode members to each other. The first electrode tab assembly may be connected (e.g., welded) to the first current collecting portion.

The secondary battery according to an embodiment of the present disclosure may include a second electrode tab assembly (e.g., second foil tab assembly) formed by coupling the respective second electrode tabs (e.g., second foil tabs) of the plurality of second electrode members to each other. The second electrode tab assembly may be connected (e.g., welded) to the second current collecting portion.

According to an embodiment of the present disclosure, at least a portion of the first electrode tab assembly and at least a portion of the second electrode tab assembly may be bent in directions opposite to each other (e.g., in the positive and negative first direction, respectively), and connected (e.g., welded) to the current collector.

The current collector according to an embodiment of the present disclosure may include a lower surface facing the electrode assembly.

The current collector according to an embodiment of the present disclosure may include an upper surface facing away from the electrode assembly (e.g., facing the terminal).

The first electrode tab assembly and the second electrode tab assembly according to an embodiment of the present disclosure may be coupled (e.g., welded) to the upper surface of the current collector.

The first electrode tab assembly according to an embodiment of the present disclosure may include a first-1 assembly portion including a first assembly weld portion (e.g. pre-welded portion, which may for example comprise one or more pre-welding areas as described above) formed by coupling (e.g., pre-welding) the respective first electrode tabs of the plurality of first electrode members to each other, the first-1 assembly portion being welded to the first current collecting portion.

The second electrode tab assembly according to an embodiment of the present disclosure may include a second-1 assembly portion including a second assembly weld portion (e.g., pre-welded portion, which may for example comprise one or more pre-welding areas as described above) formed by coupling (e.g., pre-welding) the respective second electrode tabs of the plurality of second electrode members to each other, the second-1 assembly portion being welded to the second current collecting portion.

The first electrode tab assembly according to an embodiment of the present disclosure may include a first-2 assembly portion located between the first current collecting portion and the electrode assembly.

The electrode foil tab assembly according to an embodiment of the present disclosure may include a second-2 assembly portion located between the second current collecting portion and the electrode assembly.

The first electrode tab assembly according to an embodiment of the present disclosure may include a first-3 assembly portion extending in a direction away from the current collector (e.g., be arranged on a far side of the first-1 assembly portion as seen from the current collector).

The second electrode tab assembly according to an embodiment of the present disclosure may include a second-3 assembly portion extending in a direction away from the current collector (e.g., be arranged on a far side of the second-1 assembly portion as seen from the current collector).

The current collector according to an embodiment of the present disclosure may include a connection portion having at least a portion located between the first electrode tabs and the second electrode tabs. The current collecting protrusion may protrude from the connection portion.

The first electrode tabs and the second electrode tabs according to an embodiment of the present disclosure may be spaced apart from each other in the second direction.

The electrode assembly according to an embodiment of the present disclosure may include a bridge portion (e.g., intermediate or connection portion, which may, e.g., be adjacent to a connection portion of the current collector) formed between the first electrode tabs and the second electrode tabs.

The current collecting protrusion according to an embodiment of the present disclosure may protrude toward the terminal at a position corresponding to the bridge portion (i.e., between the first electrode tabs and the second electrode tabs).

The secondary battery according to an embodiment of the present disclosure may include a plurality of second electrode members each including a second electrode tab.

The secondary battery according to the second aspect may further comprise any feature or combination of features as described herein for the secondary battery according to the first, third and/or fourth aspect and/or for the method according to the present disclosure, and vice-versa, and/or any feature or combination of features as described below for the particular embodiments in the detailed description.

In the following, a secondary battery according to the third aspect of the present disclosure is described. According to the third aspect, a secondary battery may comprise a plurality of first electrode members (also referred to as first electrode plates) each including a first electrode tab (e.g., first foil tab) and a plurality of second electrode members (also referred to as second electrode plates) each including a second electrode tab (e.g., a second foil tab).

The secondary battery according to an embodiment of the present disclosure may include an electrode assembly including a first stack portion having a width in a first direction and a length in a second direction perpendicular to the first direction. The first stack portion may be formed by stacking the plurality of the first electrode members. The electrode assembly may further comprise a second stack portion, which may be formed by stacking the plurality of second electrode members. The second stack portion may be stacked with the first stack portion in the first direction.

The secondary battery according to an embodiment of the present disclosure may include a first electrode tab assembly (e.g., first foil tab assembly) formed in the first stack portion by coupling the respective first electrode tabs (e.g., first foil tabs) of the plurality of first electrode members. The first electrode tab assembly may be located in a first region among a plurality of regions of the electrode assembly sectioned from each other in the second direction.

The secondary battery according to an embodiment of the present disclosure may include a second electrode tab assembly (e.g., second foil tab assembly) formed in the second stack portion by coupling the respective second electrode tabs (e.g., second foil tabs) of the plurality of second electrode members. The second electrode tab assembly located in a second region different from the first region among the plurality of regions of the electrode assembly sectioned from each other in the second direction.

According to an embodiment of the present disclosure, at least a portion of the first electrode tab assembly and at least a portion of the second electrode tab assembly may not overlap each other in the second direction.

The first electrode tab assembly and the second electrode tab assembly (e.g., in their entirety) according to an embodiment of the present disclosure may not overlap each other in the first direction.

The secondary battery according to an embodiment of the present disclosure may include a current collector connected (e.g., welded) to the first electrode tab assembly and the second electrode tab assembly.

The electrode assembly according to an embodiment of the present disclosure may include a bridge portion (e.g., an intermediate or connection portion) formed between the first electrode tab assembly and the second electrode tab assembly spaced apart from each other. The bridge portion may face at least a portion (e.g., a connection portion) of the current collector.

The first electrode tab assembly according to an embodiment of the present disclosure may include a first-1 assembly portion bent toward the second stack portion (e.g., in the first direction).

The second electrode tab assembly according to an embodiment of the present disclosure may include a second-1 assembly portion bent toward the first stack portion (e.g. in the first direction, in particular in a direction opposite to the direction in which the first-1 assembly portion is bent).

The secondary battery according to the third aspect may further comprise any feature or combination of features as described herein for the secondary battery according to the first, second and/or fourth aspect and/or for the method according to the present disclosure, and vice-versa, and/or any feature or combination of features as described below for the particular embodiments in the detailed description.

In the following, a secondary battery according to the fourth aspect of the present disclosure is described. According to the fourth aspect, a secondary battery may comprise a plurality of first electrode members (also referred to as first electrode plates) each including a first electrode tab (e.g., first foil tab) and a plurality of second electrode members (also referred to as second electrode plates) each including a second electrode tab (e.g., a second foil tab).

The secondary battery according to an embodiment of the present disclosure may include a first electrode tab assembly formed by connecting (e.g., welding and in particular pre-welding) the respective first electrode tabs of the plurality of first electrode members to each other.

The secondary battery according to an embodiment of the present disclosure may include a second electrode tab assembly formed by connecting (e.g., welding and in particular pre-welding) the respective second electrode tabs of the plurality of second electrode members to each other.

The secondary battery according to an embodiment of the present disclosure may include a current collector to which the first electrode tab assembly and the second electrode tab assembly are connected (e.g., welded).

The first electrode tab assembly according to an embodiment of the present disclosure may include a first assembly weld portion (e.g. pre-welded portion, which may for example comprise one or more pre-welding areas as described above) formed by welding (e.g. pre-welding) the respective first electrode tabs of the plurality of first electrode members to each other.

The first electrode tab assembly according to an embodiment of the present disclosure may include a first current collector weld portion (e.g., welded portion, which may for example comprise one or more welding areas as described above) formed by being welded to the current collector.

The second electrode tab assembly according to an embodiment of the present disclosure may include a second assembly weld portion (e.g. pre-welded portion, which may for example comprise one or more pre-welding areas as described above) formed by welding (e.g., pre-welding) the respective second electrode tabs of the plurality of second electrode members to each other.

The second electrode tab assembly according to an embodiment of the present disclosure may include a second current collector weld portion (e.g., welded portion, which may for example comprise one or more welding areas as described above) formed by being welded to the current collector.

The first electrode tab assembly according to an embodiment of the present disclosure may include a first-1 assembly portion (which may, e.g., be arranged on an upper surface of the current collector) in which the first assembly weld portion and the first current collector weld portion are formed.

The second electrode tab assembly according to an embodiment of the present disclosure may include a second-1 assembly portion (which may, e.g., be arranged on an upper surface of the current collector) in which the second assembly weld portion and the second current collector weld portion are formed.

The secondary battery according to an embodiment of the present disclosure may include an electrode assembly formed by stacking the plurality of first electrode members and the plurality of second electrode members.

The first electrode tab assembly according to an embodiment of the present disclosure may include a first-2 assembly portion located between the first current collector weld portion and the electrode assembly (e.g., at an upper side of the electrode assembly, for example between the current collector/first current collecting portion and the electrode assembly).

The second electrode tab assembly according to an embodiment of the present disclosure may include a second-2 assembly portion located between the second current collector weld portion and the electrode assembly (e.g., at an upper side of the electrode assembly, for example between the current collector/second current collecting portion and the electrode assembly).

The current collector according to an embodiment of the present disclosure may include a first current collecting portion located between the first current collector weld portion and the first-2 assembly portion.

The current collector according to an embodiment of the present disclosure may include a second current collecting portion located between the second current collector weld portion and the second-2 assembly portion.

The current collector according to an embodiment of the present disclosure may include a lower surface facing the electrode assembly.

The current collector according to an embodiment of the present disclosure may include a first weld surface (e.g., an upper surface of the first current collecting portion) which faces in a direction opposite to the lower surface, and on which (e.g., to which) the first assembly weld portion and the first current collector weld portion are joined.

The current collector according to an embodiment of the present disclosure may include a second weld surface (e.g., an upper surface of the first current collecting portion) which faces in the direction opposite to the lower surface, and on which the second assembly weld portion and the second current collector weld portion are joined.

The secondary battery according to an embodiment of the present disclosure may include an electrode assembly formed by stacking the plurality of first electrode members and the plurality of second electrode members.

The secondary battery according to an embodiment of the present disclosure may include a current collector including a first surface (e.g., lower surface) facing the electrode assembly, and a second surface (e.g., upper surface) opposite to the first surface, the current collector including at least a portion (e.g., a connection portion) located between the first electrode tabs and the second electrode tabs.

The first electrode tabs and the second electrode tabs according to an embodiment of the present disclosure may be connected (e.g., welded) to the second surface at offset positions with the current collector.

The first electrode tab assembly and the second electrode tab assembly according to an embodiment of the present disclosure may be connected (e.g., welded) to the second surface at positions at which the first electrode tab assembly and the second electrode tab assembly do not overlap each other in a width direction (first direction) of the current collector.

The current collector (e.g., the first current collecting portion) according to an embodiment of the present disclosure may include a first weld surface forming at least a portion of the second surface.

The current collector (e.g., the second current collecting portion) according to an embodiment of the present disclosure may include a second weld surface that forms at least a portion of the second surface and is spaced apart from the first weld surface.

According to an embodiment of the present disclosure, the first electrode tab assembly may be welded to the first weld surface, and the second electrode tab assembly may be welded to the second weld surface.

The secondary battery according to an embodiment of the present disclosure may include a protective member (e.g., an insulator) including at least a portion located between the current collector and the electrode assembly. The insulator may for example cover at least a portion of the first-1 assembly portion and at least a portion of the second-1 assembly portion.

The current collector according to an embodiment of the present disclosure may include a current collecting protrusion formed between an edge of the electrode assembly and the first and second electrode tabs.

The secondary battery according to an embodiment of the present disclosure may include a cover covering the first and second electrode tabs connected (e.g., welded) to the current collector.

### BRIEF DESCRIPTION OF THE DRAWINGS

The following drawings attached to this specification illustrate preferred embodiments of the present disclosure, and help to further understand the technical spirit of the present disclosure along with the aforementioned contents of the disclosure. Accordingly, the present disclosure should not be construed as being limited to only contents described in such drawings.
FIG. 1 is a view illustrating a secondary battery according to an embodiment of the present disclosure (e.g., in an assembled state).
FIG. 2 is a view illustrating the secondary battery of FIG. 1 according to an embodiment of the present disclosure (e.g., in a disassembled or partially assembled state).
FIG. 3 is a view illustrating an electrode assembly in which a plurality of first and second electrode tabs are formed on an electrode portion, as may be used in the secondary battery according to an embodiment of the present disclosure such as the secondary battery of FIG. 1.
FIGS. 4A and 4B are views illustrating a first electrode plate and a second electrode plate, respectively, as may be used in the secondary battery according to an embodiment of the present disclosure such as the secondary battery of FIG. 1.
FIGS. 5A and 5B are views illustrating a third electrode plate and a fourth electrode plate, respectively, as may be used in the secondary battery according to an embodiment of the present disclosure such as the secondary battery of FIG. 1.
FIG. 6A and 6B are views illustrating a current collector as may be used in the secondary battery according to an embodiment of the present disclosure such as the secondary battery of FIG. 1.
FIG. 7 is a view illustrating a current collector as may be used in the secondary battery according to an embodiment of the present disclosure such as the secondary battery of FIG. 1.
FIG. 8 is a flowchart illustrating a method of manufacturing a secondary battery such as the secondary battery of FIG. 1 according to an embodiment of the present disclosure.
FIG. 9 is a view illustrating a plurality of first electrode tabs and a plurality of second electrode tabs that are respectively grouped, in the secondary battery according to an embodiment of the present disclosure such as the secondary battery of FIG. 1.
FIGS. 10A and 10B are views illustrating the plurality of first electrode tabs and the plurality of second electrode tabs that are respectively subjected to pre-welding (first or primary welding), in the secondary battery according to an embodiment of the present disclosure such as the secondary battery of FIG. 1.
FIGS. 11A, 11B, 11C and 11D are views illustrating a current collector placed between the plurality of first electrode tabs and the plurality of second electrode tabs, in the secondary battery according to embodiments of the present disclosure such as the secondary battery of FIG. 1.
FIGS. 12A, 12B and 12C are views illustrating the current collector and the first and second electrode tabs that are welded to each other, in the secondary battery according to embodiments of the present disclosure such as the secondary battery of FIG. 1.
FIG. 13 is a view illustrating a cap assembly coupled to the electrode assembly, in the secondary battery according to an embodiment of the present disclosure such as the secondary battery of FIG. 1.
FIG. 14 is a flowchart illustrating a method of manufacturing a secondary battery such as the secondary battery of FIG. 1 according to another embodiment of the present disclosure.
FIGS. 15A and 15B are views illustrating a plurality of first electrode tabs and a plurality of second electrode tabs that are respectively grouped, in the secondary battery according to another embodiment of the present disclosure such as the secondary battery of FIG. 1.
FIG. 16 is a sectional view taken along reference line F-F' of FIG. 15B.
FIGS. 17A and 17B views illustrating a current collector placed between the plurality of first electrode tabs and the plurality of second electrode tabs, in the secondary battery according to another embodiment of the present disclosure.
FIG. 18 is a view illustrating the current collector and the first and second electrode tabs that are welded to each other, in the secondary battery according to another embodiment of the present disclosure.
FIG. 19 is a view illustrating a cover disposed in a secondary battery according to another embodiment of the present disclosure.
FIG. 20 is a sectional view taken along reference line G-G' of FIG. 19.

### DETAILED DESCRIPTION

Since the present disclosure may be modified in various forms, and may have various embodiments, particular embodiments will be illustrated in the accompanying drawings and described in detail with reference to the drawings. However, this is not intended to limit the present disclosure to particular modes of practice, and it is to be appreciated that all changes, equivalents, and substitutes that do not depart from the spirit and technical scope of the present disclosure are encompassed in the present disclosure.

For ease of description, various features and elements of the present disclosure may be disclosed in combination in the embodiments described below. Unless mentioned otherwise, this does, however, not imply any functional or structural link between the respective features and elements. Each individual one of the features and elements (and each combination of features and elements) described below may also be present in the secondary battery according to the present disclosure in isolation and separate from the other features and elements of the respective embodiment.

The terminology used herein is for the purpose of describing particular embodiments only and is not intended to be limiting the present disclosure. In the present disclosure, the singular forms are intended to include the plural forms as well, unless the context clearly indicates otherwise. It will be further understood that the terms "comprise", "include", "have", etc. when used in this specification, are intended to specify the presence of stated features, integers, steps, operations, elements, components, and/or combinations of them but do not preclude the presence or addition of one or more other features, integers, steps, operations, elements, components, and/or combinations thereof.

Hereinafter, embodiments of the present disclosure will be described in detail with reference to the accompanying drawings. It should be noted that like reference numerals refer to like elements throughout the attached drawings. Details of well-known configurations and functions may be omitted to avoid unnecessarily obscuring the gist of the present disclosure. For the same reason, in the accompanying drawings, some elements are enlarged, omitted, or depicted schematically.

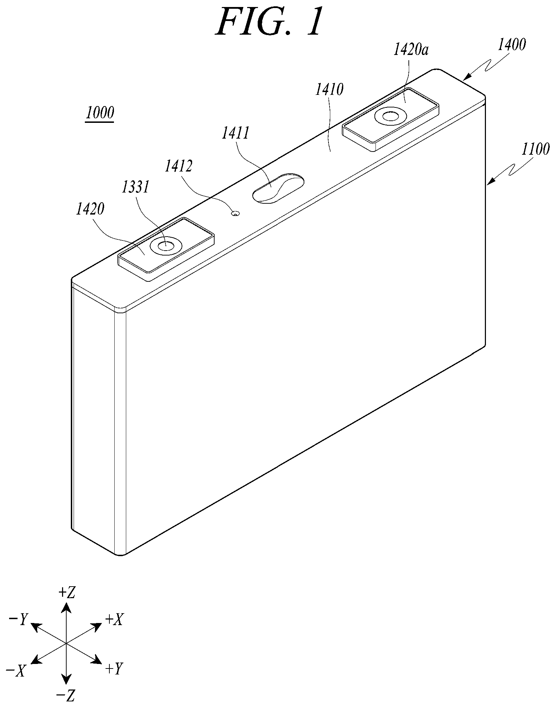

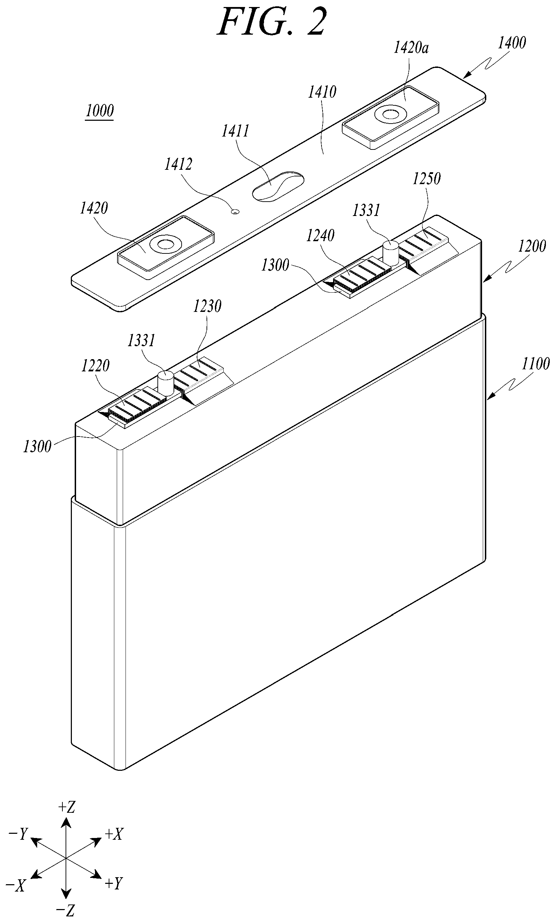

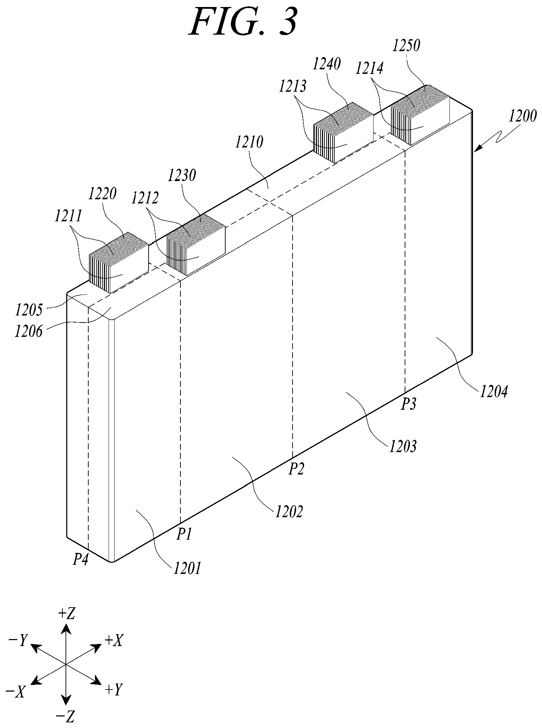

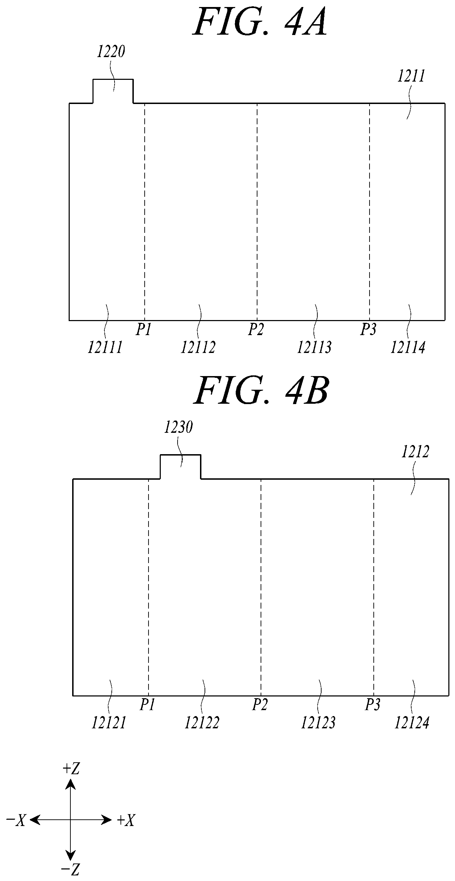

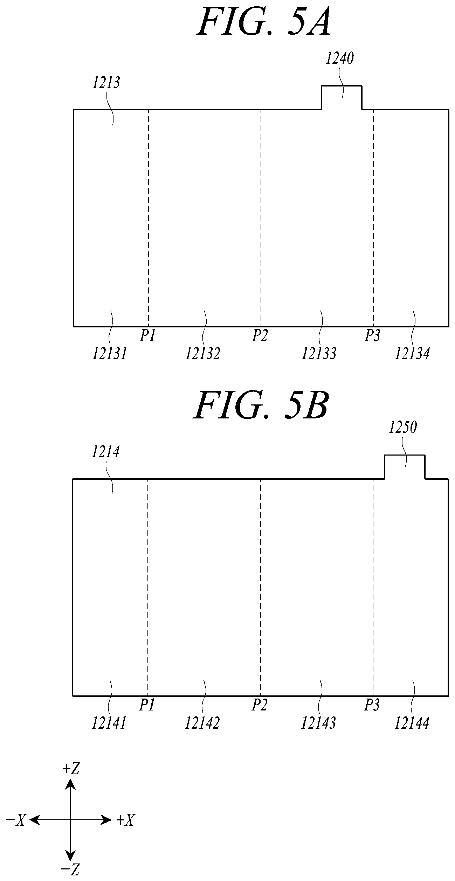

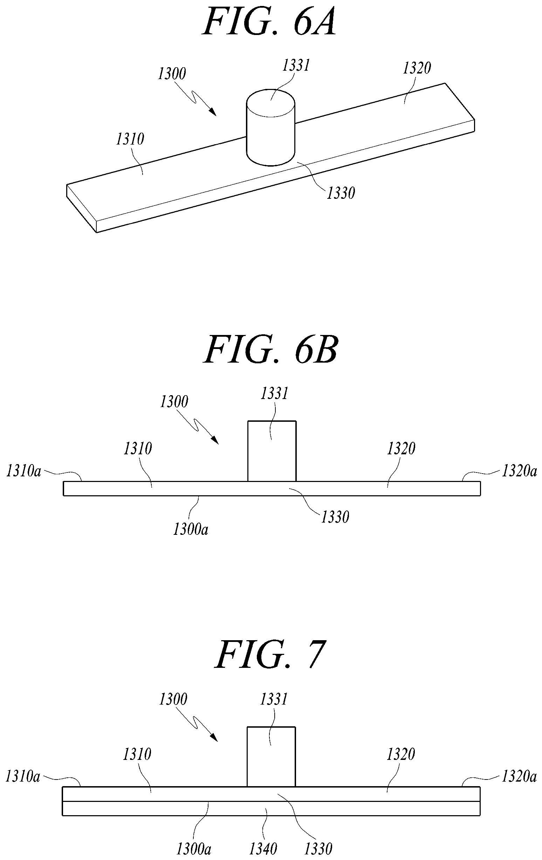

FIG. 1 is a view illustrating a secondary battery according to an embodiment of the present disclosure. FIG. 2 is a view illustrating the secondary battery according to an embodiment of the present disclosure. FIG. 3 is a view illustrating an electrode assembly in which a plurality of first and second electrode tabs are formed on an electrode portion, in the secondary battery according to an embodiment of the present disclosure. FIGS. 4A and 4B are views illustrating a first electrode plate and a second electrode plate in the secondary battery according to an embodiment of the present disclosure. FIGS. 5A and 5B are views illustrating a third electrode plate and a fourth electrode plate in the secondary battery according to an embodiment of the present disclosure. FIGS. 6A and 6B is a view illustrating a current collector in the secondary battery according to an embodiment of the present disclosure. FIG. 7 is a view illustrating a current collector in the secondary battery according to an embodiment of the present disclosure.

As mentioned above, directions, orientations and similar geometric terms may be defined relative to the secondary battery (e.g., the casing and/or the electrode assembly thereof), in particular relative to the electrode tabs and the current collector. A side or surface of the electrode assembly and/or of the secondary battery (e.g., the casing thereof) at or adjacent to which the current collector and the electrode tabs are arranged (which may, e.g., be the side or surface of the secondary battery in which an opening is formed and/or where a cap/cap assembly is arranged) may be referred to as a top side/surface of the electrode assembly and secondary battery, respectively (without intending to imply any particular or preferred orientation with respect to the direction of gravity or to other (external) entities such as a device that the battery is used in). Other geometric terms are to be understood as defining a relative geometric relation to this top side or surface (with, e.g., a bottom or lower side or surface of the battery referring to the side or surface of the battery opposite to the top side or surface).

A direction from the lower side or surface of the electrode assembly and/or of the secondary battery to the upper side or surface of the electrode assembly and/or of the secondary battery (e.g., towards the current collector) may be referred to as a vertical direction (or height direction). In the figures, the vertical direction may correspond to the Z direction. A direction perpendicular to the vertical direction (e.g., parallel to the upper side or surface) may be referred to as a horizontal direction. A direction of smallest extent (e.g., a short or minor axis) of the electrode assembly and/or of the secondary battery in a horizontal plane (perpendicular to the vertical direction) may be referred to as a width direction of the electrode assembly and/or of the secondary battery. In the figures, the width direction may correspond to the Y direction. A direction of a long or major axis of the electrode assembly and/or of the secondary battery in a horizontal plane (e.g., a direction of a long side or edge and/or a direction of largest extent of the electrode assembly and/or of the secondary battery in the horizontal plane) may be referred to as a longitudinal or length direction. In the figures, the length direction may correspond to the X direction.

The width direction may for example coincide with a stacking direction of the electrode assembly. In some examples, the bending direction of the electrode tabs 1220, 1230, 1240, 1250 may coincide with the width direction. In some examples, the displacement direction (second direction) as referred to above may coincide with the longitudinal direction. Depending on the shape of the secondary battery, the longitudinal direction may or may not be perpendicular to the width direction. Stacked electrode members/plates of the electrode assembly may for example extend along (e.g., parallel or substantially parallel to) the longitudinal direction and the vertical direction. Wound electrode member(s)/plate(s) may for example be wound along a winding axis along (e.g., parallel or substantially parallel to) the vertical direction

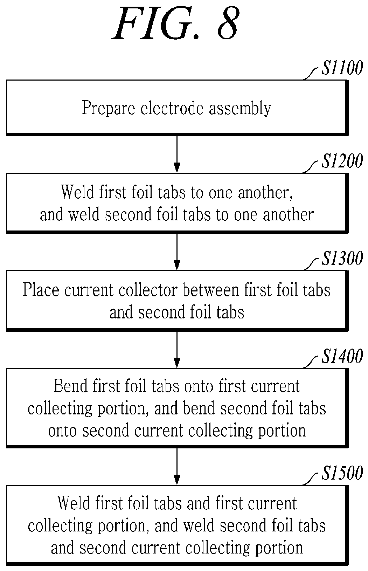

As illustrated in FIGS. 1 and 2, a secondary battery 1000 according to an embodiment of the present disclosure includes a casing 1100, an electrode assembly 1200, a current collector 1300, and a cap assembly 1400. The secondary battery 1000 may for example be manufacture by a method of manufacturing a secondary battery according to the present disclosure, in particular a method as described below with reference to FIGS. 8 to 13.

The casing 1100 may form an outer shape of the secondary battery 1000. The casing 1100 may define (e.g., form) a space capable of accommodating the electrode assembly 1200 therein. The casing 1100 may have an opening on one surface (e.g., the upper surface) thereof. In the present embodiment, the casing 1100 has a rectangular parallelepiped shape, but is not limited thereto and may be modified in various ways (e.g., have other prismatic and in particular quadrilateral prismatic shapes). The casing 1100 may be made of a rigid material capable of protecting the electrode assembly 1200 accommodated therein. For example, the casing 1100 may be made of metal such as aluminum or stainless steel.

Electrolyte may be received together with the electrode assembly 1200 in the casing 1100. The electrolyte is not particularly limited and may for example include a lithium salt such as LiPF₆ or LiBF₄ in an organic solvent such as ethylene carbonate (EC), propylene carbonate (PC), diethyl carbonate (DEC), ethyl methyl carbonate (EMC), or dimethyl carbonate (DMC). The electrolyte may be in a liquid, solid, or gel phase.

The electrode assembly 1200 may be accommodated in the casing 1100. As illustrated in FIG. 3, the electrode assembly 1200 may include an electrode portion 1210, a plurality of first electrode tabs (e.g., first foil tabs) 1220, and a plurality of second electrode tabs (e.g., second foil tabs) 1230. Optionally, the electrode assembly 1200 may further includes a plurality of third electrode tabs (e.g., third foil tabs) 1240, and a plurality of fourth electrode tabs (e.g., fourth foil tabs) 1240 as illustrated in FIGS. 2 and 3.

The plurality of first electrode tabs 1220 and the plurality of second electrode tabs 1230 are placed on one end (e.g., at a first/upper side) of the electrode portion 1210. The plurality of first electrode tabs 1220 may be grouped and aligned with one another among the first electrode tabs 1220. The plurality of second electrode tabs 1230 may be grouped and aligned with one another among the second electrode tabs 1230. Put differently, all of the first electrode tabs 1220 may be arranged (and overlapped with each other) at a first position along the longitudinal direction and all of the second electrode tabs 1230 may be arranged (and overlapped with each other) at a second position along the longitudinal direction different from (i.e., displaced or offset from) the first position as illustrated in FIG. 3.

The plurality of first electrode tabs 1220 and the plurality of second electrode tabs 1230, which are respectively aligned with one another, may be arranged so as not to overlap (e.g., be spaced apart) in the width direction (as an example of a first/bending direction, i.e., in this example the first/bending direction may coincide with the width direction/Y direction) and the longitudinal direction (as an example of a second/displacement direction, i.e., in this example the second displacement direction may coincide with the longitudinal direction/X direction) of the electrode assembly 1200 as illustrated in FIG. 3.

In other examples, the first electrode tabs 1220 and the plurality of second electrode tabs 1230 may only be spaced apart from each other in the longitudinal direction but may for example overlap (partially) or be aligned (e.g., overlap completely) with each other in the width direction. The first electrode tabs 1220 and the plurality of second electrode tabs 1230 may for example be displaced (e.g., dislocated or arranged at offset positions) with respect to each other along the width direction (e.g., so as to partially overlap). In other examples, the first electrode tabs 1220 and the plurality of second electrode tabs 1230 may only be spaced apart from each other in the width direction but may for example overlap (partially) or be aligned (e.g., overlap completely) with each other in the longitudinal direction. The first electrode tabs 1220 and the plurality of second electrode tabs 1230 may for example be displaced (e.g., dislocated or arranged at offset positions) with respect to each other along the longitudinal direction (e.g., so as to partially overlap). In some examples, the first/bending direction may not coincide with the width direction and/or the second/displacement direction may not coincide with the longitudinal direction.

The plurality of third electrode tabs 1240 and the plurality of fourth electrode tabs 1250 may be arranged in a similar way (for example spaced apart along one or both of the width and length directions) but, e.g., at in an opposite part (e.g., end) of the first/upper side of the electrode portion 1210. The arrangement of the third and fourth electrode tabs 1240, 1250 may for example be rotated by 180° (as in the example of FIG. 3) or mirrored from the arrangement of the first and second electrode tabs 1220, 1230.

Specifically, the electrode portion 1210 may include a plurality of first electrode plates (also referred to as first electrode members) 1211, a plurality of second electrode plates (second electrode members) 1212, and optionally some or all of a plurality of third electrode plates (third electrode members) 1213, a plurality of fourth electrode plates (fourth electrode members) 1214, and separators. In some examples, the first and second electrode plates 1211, 1212 may be identical to each other apart from a position of the respective (i.e., first and second, respectively) electrode tab, e.g., as illustrated in FIG. 4A/B. In some examples, the third and fourth electrode plates 1213, 1214 may be identical to each other apart from a position of the respective (i.e., third and fourth, respectively) electrode tab, e.g., as illustrated in FIG. 5A/B.

An active material may be applied to the plurality of first electrode plates 1211, the plurality of second electrode plates 1212, the plurality of third electrode plates 1213, and the plurality of fourth electrode plates 1214.

The plurality of first electrode plates 1211 and the plurality of second electrode plates 1212 may have the same (first) polarity, and may, e.g., be positive electrode plates (or, in other examples, negative electrode plates). The plurality of first electrode plates 1211 and the plurality of second electrode plates 1212 may for example each be formed by applying an active material such as a transition metal oxide to a metal plate such as an aluminum plate.

The plurality of third electrode plates 1213 and the plurality of fourth electrode plates 1214 may have the same (second) polarity (which may be opposite to the first polarity, and may, e.g., be negative electrode plates. The plurality of third electrode plates 1213 and the plurality of fourth electrode plates 1214 may for example each be formed by applying an active material such as graphite or carbon to a metal plate such as a copper or nickel plate.

The separators may be positioned between the plurality of first to fourth electrode plates 1211, 1212, 1213, and 1214, for example to prevent a short circuit between the plurality of first to fourth electrode plates 1211, 1212, 1213, and 1214. The separators may be made of polyethylene, polypropylene, a composite material thereof, or the like. In other examples, the secondary battery 1000 may not comprise (distinct) separators. The secondary battery 1000 may for example be an all-solid-state battery. The all-solid state battery may comprise a solid electrolyte, wherein said electrolyte may, e.g., act as both an electrolyte and a separator.

The electrode portion 1210 may for example be formed by positioning separators between the first electrode plates 1211 and the third electrode plates 1213, which are alternately arranged (e.g., stacked), and between the second electrode plates 1212 and the fourth electrode plates 1214, which are alternately arranged (e.g., stacked). In other words, in an embodiment, the electrode portion 1210 may be formed in such a way that one side (e.g., a first part/portion or half 1205) of the electrode portion 1210 is formed by stacking the first electrode plate 1211, the separator, the third electrode plate 1213, and the separator in the listed order, tens to hundreds of times, and another side (e.g., a second part/portion or half 1206) of the electrode portion 1210 is formed by stacking the second electrode plate 1212, the separator, the fourth electrode plate 1214, and the separator in the listed order, tens to hundreds of times. In another embodiment, the electrode portion 1210 may be formed by sequentially stacking the first electrode plate 1211, the separator, the third electrode plate 1213, the separator, the second electrode plate 1212, the separator, the fourth electrode plate 1214, and the separator in the listed order, and then winding the stacked structure. In yet another embodiment, a first part (or half) 1205 of the electrode portion 1210 may be formed by sequentially stacking the first electrode plate 1211, the separator, the third electrode plate 1213, and the separator in the listed order, and then winding the stacked structure and a second part (or half) 1206 of the electrode portion 1210 may be formed by sequentially stacking the second electrode plate 1212, the separator, the fourth electrode plate 1214, and the separator in the listed order, and then winding the stacked structure.

Put differently, the plurality of first electrode plates 1211 and the plurality of third electrode plates 1213 may be alternately arranged. For example, each of the plurality of third electrode plates 1213 may be placed between every two adjacent ones of the plurality of first electrode plates 1211. Each of the plurality of first electrode plates 1211 may be placed between every two adjacent ones of the plurality of third electrode plates 1213. The plurality of first electrode plates 1211 and the plurality of third electrode plates 1213 may be alternately stacked in the width direction (e.g., the +Y direction). The electrode assembly 1200 may include a first stack portion 1205 in which the plurality of first electrode plates 1211 and the plurality of third electrode plates 1213 are alternately arranged. The first stack portion 1205 may be a portion of the electrode assembly 1200. The plurality of first electrode plates 1211 and the plurality of third electrode plates 1213 may be located in the first stack portion 1205. The plurality of second electrode plates 1212 and the plurality of fourth electrode plates 1214 may be alternately arranged. For example, each of the plurality of fourth electrode plates 1214 may be placed between every two adjacent ones of the plurality of second electrode plates 1212. Each of the plurality of second electrode plates 1212 may be placed between every two adjacent ones of the plurality of fourth electrode plates 1214. The plurality of second electrode plates 1212 and the plurality of fourth electrode plates 1214 may be alternately stacked in the width direction (e.g., the +Y direction). The electrode assembly 1200 may include a second stack portion 1206 in which the plurality of second electrode plates 1212 and the plurality of fourth electrode plates 1214 are alternately arranged. The second stack portion 1206 may be a portion of the electrode assembly 1200. The plurality of second electrode plates 1212 and the plurality of fourth electrode plates 1214 may be located in the second stack portion 1206.

The first stack portion 1205 and the second stack portion 1206 may be stacked on each other. The electrode assembly 1200 may be a structure formed by stacking the first stack portion 1205 and the second stack portion 1206.

Each of the first stack portion 1205 and the second stack portion 1206 may form a portion of the electrode assembly 1200. For example, the first stack portion 1205 may correspond to a portion of the electrode assembly 1200 located on one side (e.g., corresponding to the -Y direction) with respect to an imaginary plane P4 (e.g., a middle or center plane of the electrode assembly) that crosses the electrode assembly 1200 in a direction perpendicular to the width direction (e.g., the +Y direction) of the electrode assembly 1200. The second stack portion 1206 may correspond to a remaining portion of the electrode assembly 1200 located on an opposite side (e.g., corresponding to the +Y direction) with respect to the plane P4.

The first stack portion 1205 may be formed by placing separators between the plurality of first electrode plates 1211 and the plurality of third electrode plates 1213 that are alternately arranged. The second stack portion 1206 may be formed by placing separators between the plurality of second electrode plates 1212 and the plurality of fourth electrode plates 1214 that are alternately arranged.

Although, in the present embodiment, the electrode assembly 1200 is illustrated as including the single electrode portion 1210, in another embodiment, the electrode assembly 1200 may include a plurality of electrode portions 1210. The plurality of electrode portions 1210 may be electrically connected to one another.

The first electrode tabs 1220, the second electrode tabs 1230, third electrode tabs 1240, and fourth electrode tabs 1250, to which no active material may be applied, may for example be respectively formed at one ends (e.g., first/upper sides or ends) of the plurality of first to fourth electrode plates 1211, 1212, 1213, and 1214.

The first, second, third and fourth electrode tabs 1220, 1230, 1240, 1250 may for example be embodied as (first, second, third and fourth) foil tabs, which are used as a nonlimiting example for illustration purposes in the following. The following description may, however, likewise apply to other embodiments, where some or all of the first, second, third and fourth electrode tabs 1220, 1230, 1240, 1250 may be embodied differently.

In an embodiment, each of the electrode plates 1211, 1212, 1213, and 1214 and the corresponding foil tab 1220, 1230, 1240, or 1250 may be integrally formed, for example by cutting a predetermined portion of a single metal plate using a laser or the like, such that the electrode plate 1211, 1212, 1213, or 1214 and the foil tab 1220, 1230, 1240, or 1250 remain. The plurality of foil tabs 1220, 1230, 1240, and 1250 may be formed in a direction toward the cap assembly 1400 (e.g., an upward (vertical) direction). Each of the foil tabs 1220, 1230, 1240, and 1250 may for example be at least a portion of an uncoated portion formed at a corresponding one of the plurality of first to fourth electrode plates 1211, 1212, 1213, and 1214.

Each of the first foil tabs 1220 may be formed on a first position of the corresponding first electrode plate 1211 (e.g., along the longitudinal direction as illustrated in FIG. 3 and 4A). Each of the second foil tabs 1230 may be formed on a second position of the corresponding second electrode plate 1212 (e.g., along the longitudinal direction), see FIG. 3 and 4B. The second position may be different from the first position, e.g., displaced or offset by at least a longer one of the length of the first foil tabs 1220 and the length of the second foil tabs 1220 (wherein said lengths may, e.g., be equal). Similarly, each of the third foil tabs 1240 may be formed on a third position of the corresponding third electrode plate 1213 (e.g., along the longitudinal direction as illustrated in FIG. 3 and 5A). Each of the fourth foil tabs 1250 may be formed on a fourth position of the corresponding fourth electrode plate 1214(e.g., along the longitudinal direction), see FIG. 3 and 5B. The fourth position may be different from the third position, e.g., displaced or offset by at least a longer one of the length of the third foil tabs 1240 and the length of the fourth foil tabs 1250 (wherein said lengths may, e.g., be equal).

The plurality of first electrode plates 1211 and the plurality of third electrode plates 1213 may be alternately stacked with the corresponding separators interposed between adjacent electrode plates. A stack including the plurality of first electrode plates 1211 and the plurality of third electrode plates 1213 may form one half (or generally a first part/portion 1205) of the electrode portion 1210.

The plurality of second electrode plates 1212 and the plurality of fourth electrode plates 1214 may be alternately stacked with the corresponding separators interposed between adjacent electrode plates. A stack including the plurality of second electrode plates 1212 and the plurality of fourth electrode plates 1214 may form a remaining half (or generally a remaining second part/portion 1206) of the electrode portion 1210.

The stack including the plurality of first electrode plates 1211 and the plurality of third electrode plates 1213 (e.g., the first stack portion 1205) and the stack including the plurality of second electrode plates 1212 and the plurality of fourth electrode plates 1214 (e.g., the second stack portion) may be arranged (e.g., connected) in the width direction of the electrode portion 1210. During formation of the electrode assembly 1200, the plurality of first electrode plates 1211 and the plurality of third electrode plates 1213 may be stacked before stacking the plurality of second electrode plates 1212 and the plurality of fourth electrode plates 1214 (or vice-versa).

When the plurality of first to fourth electrode plates 1211, 1212, 1213, and 1214 are stacked, the plurality of first foil tabs 1220 may overlap one another at the first position (e.g., be aligned with each other, for example so as to be congruent with one another), for example in a first region 1201 of the electrode assembly. The plurality of second foil tabs 1230 overlap one another at the second position (e.g., be aligned with each other, for example so as to be congruent with each other), for example in a second region 1202 of the electrode assembly. In other words, the plurality of first foil tabs 1220 may be grouped at the first position (e.g., in the first region 1201), and the plurality of second foil tabs 1230 may be grouped at the second position (e.g., in the second region 1202). The first position and the second position are spaced apart from each other on the electrode plate, e.g., such that the plurality of first foil tabs 1220 and the plurality of second foil tabs 1230 is spaced apart from each other at least along the longitudinal direction (e.g., located in the different regions 1201 and 1202 of the electrode assembly 1200). The plurality of first foil tabs 1220 that are grouped and the plurality of second foil tabs 1230 that are grouped may be spaced apart in the width direction (e.g., as a result of the stacking of the first and second foil tabs 1220, 1230) and the longitudinal direction of the electrode assembly 1200 (e.g., as a result of the different (first/second) positions of the first and second foil tabs 1220, 1230 on the respective electrode plate/member) as illustrated in FIG. 3 (e.g., so as to be separated by a gap, for example shortest connection vector, extending along both the width direction and the longitudinal direction).

The plurality of first foil tabs 1220 that are grouped may be primarily welded (e.g., pre-welded/welded first) to one another among the first foil tabs 1220. The plurality of second foil tabs 1230 that are grouped may be primarily welded (e.g., pre-welded/welded first) to one another among the second foil tabs 1230.

The plurality of first foil tabs 1220 and the plurality of second foil tabs 1230 may be foil tabs having the same polarity. The plurality of first foil tabs 1220 and the plurality of second foil tabs 1230 may be primarily welded at respective positions spaced apart in the width direction and the longitudinal direction of the electrode assembly 1200, for example to enable stable welding of a large number of foil tabs. The plurality of first foil tabs 1220 and the plurality of second foil tabs 1230 may then be secondarily welded (e.g., welded second/later) on the current collector 1300. In other words, although a single foil tab is formed on each electrode plate, two foil tab groups having the same polarity but different positions may be formed after stacking the electrode plates by varying the positions at which the foil tabs are formed on the respective electrode plates. In another embodiment, two or more foil tabs may be formed at different positions on the same polarity side.

When the plurality of first to fourth electrode plates 1211, 1212, 1213, and 1214 are stacked, the plurality of third foil tabs 1240 overlap one another at the third position, and the plurality of fourth foil tabs 1250 overlap one another at the fourth position, e.g., similar as described above for the first and second foil tabs 1220, 1230. In other words, the plurality of third foil tabs 1240 are grouped at the third position, and the plurality of fourth foil tabs 1250 are grouped at the fourth position. The third position and the fourth position are spaced apart from each other on the electrode plate. The plurality of third foil tabs 1240 that are grouped and the plurality of fourth foil tabs 1250 that are grouped may be spaced apart in the longitudinal direction and, optionally, in the width direction of the electrode assembly 1200, e.g., similar as described above for the first and second foil tabs 1220, 1230.

The plurality of third foil tabs 1240 and the plurality of fourth foil tabs 1250 may be foil tabs having the same polarity.

The plurality of foil tabs 1220, 1230, 1240, and 1250, which overlap at the respective positions, may each be joined by ultrasonic welding, laser welding, or the like to facilitate current flow.

In some examples, the electrode assembly 1200 may include a plurality of regions 1201, 1202, 1203, and 1204, e.g., as illustrated in FIG. 3. The plurality of regions 1201, 1202, 1203, and 1204 may be arranged in the longitudinal direction (e.g., the +X direction) of the electrode assembly 1200. Each of the plurality of regions 1201, 1202, 1203, and 1204 may form a portion of the electrode assembly 1200. The plurality of regions 1201, 1202, 1203, and 1204 may be sectioned from one another by a plurality of (imaginary) planes P1, P2, and P3 perpendicular to the longitudinal direction (+X direction) of the electrode assembly 1200. The plurality of planes P1, P2, and P3 may be imaginary planes spaced apart from one another in the longitudinal direction (+X direction) of the electrode assembly 1200, and may section the electrode assembly 1200 into the plurality of regions 1201, 1202, 1203, and 1204. For example, the first plane P1 may section the electrode assembly 1200 at a boundary between the first region 1201 and the second region 1202. For example, the second plane P2 may section the electrode assembly 1200 at a boundary between the second region 1202 and the third region 1203. For example, the third plane P3 may section the electrode assembly 1200 at a boundary between the third region 1203 and the fourth region 1204.

The first, second, third, and fourth electrode/foil tabs 1220, 1230, 1240, and 1250 may be respectively located in different regions of the electrode assembly 1200. The first foil tab 1220 may be located in the first region 1201. The second foil tab 1230 may be located in the second region 1202. The third foil tab 1240 may be located in the third region 1203. The fourth foil tab 1250 may be located in the fourth region 1204. In other words, the first, second, third, and fourth foil tabs 1220, 1230, 1240, and 1250 may be respectively located in the different regions 1201, 1202, 1203, and 1204 sectioned from one another along the longitudinal direction (e.g., the +X direction) of the electrode assembly 1200.

Referring to FIGS. 3 and 4, the first electrode plate 1211 may include a plurality of first electrode portions 12111, 12112, 12113, and 12114. The plurality of first electrode portions 12111, 12112, 12113, and 12114 may be sectioned from one another by the plurality of planes P1, P2, and P3 spaced apart from one another in the longitudinal direction (e.g., the +X direction) of the electrode assembly 1200. The first electrode plate 1211 may include a first-1 electrode portion 12111 located in the first region 1201. The first electrode plate 1211 may include a first-2 electrode portion 12112 located in the second region 1202. The first electrode plate 1211 may include a first-3 electrode portion 12113 located in the third region 1203. The first electrode plate 1211 may include a first-4 electrode portion 12114 located in the fourth region 1204. The first electrode/foil tab 1220 may be formed on the first-1 electrode portion 12111 of the first electrode plate 1211.

The second electrode plate 1212 may include a plurality of second electrode portions 12121, 12122, 12123, and 12124. The plurality of second electrode portions 12121, 12122, 12123, and 12124 may be sectioned by the plurality of planes P1, P2, and P3, which are spaced apart from one another in the longitudinal direction (e.g., the +X direction) of the electrode assembly 1200. The second electrode plate 1212 may include a second-1 electrode portion 12121 located in the first region 1201. The second electrode plate 1212 may include a second-2 electrode portion 12122 located in the second region 1202. The second electrode plate 1212 may include a second-3 electrode portion 12123 located in the third region 1203. The second electrode plate 1212 may include a second-4 electrode portion 12124 located in the fourth region 1204. The second electrode/foil tab 1230 may be formed on the second-2 electrode portion 12122 of the second electrode plate 1212.

Referring to FIGS. 3 and 5, the third electrode plate 1213 may include a plurality of third electrode portions 12131, 12132, 12133, and 12134. The plurality of third electrode portions 12131, 12132, 12133, and 12134 may be sectioned by the plurality of planes P1, P2, and P3, which are spaced apart from one another in the longitudinal direction (e.g., the +X direction) of the electrode assembly 1200. The third electrode plate 1213 may include a third-1 electrode portion 12131 located in the first region 1201. The third electrode plate 1213 may include a third-2 electrode portion 12132 located in the second region 1202. The third electrode plate 1213 may include a third-3 electrode portion 12133 located in the third region 1203. The third electrode plate 1213 may include a third-4 electrode portion 12134 located in the fourth region 1204. The third electrode/foil tab 1240 may be formed on the third-3 electrode portion 12133 of the third electrode plate 1213.

The fourth electrode plate 1214 may include a plurality of fourth electrode portions 12141, 12142, 12143, and 12144. The plurality of fourth electrode portions 12141, 12142, 12143, and 12144 may be sectioned by the plurality of planes P1, P2, and P3, which are spaced apart from one another in the longitudinal direction (e.g., the +X direction) of the electrode assembly 1200. The fourth electrode plate 1214 may include a fourth-1 electrode portion 12141 located in the first region 1201. The fourth electrode plate 1214 may include a fourth-2 electrode portion 12142 located in the second region 1202. The fourth electrode plate 1214 may include a fourth-3 electrode portion 12143 located in the third region 1203. The fourth electrode plate 1214 may include a fourth-4 electrode portion 12144 located in the fourth region 1204. The fourth electrode/foil tab 1250 may be formed on the fourth-4 electrode portion 12144 of the fourth electrode plate 1214.

As illustrated in FIGS. 6A and 6B, the current collector 1300 may include a first current collecting portion 1310, a second current collecting portion 1320, and a connection portion 1330 (e.g., arranged between the first and a second current collecting portion 1310, 1320).

The current collector 1300 (e.g., a base thereof formed by portions 1310, 1320 and 1330) may have a rectangular shape extending in the longitudinal direction of the electrode assembly 1200 (e.g., in the X direction in FIGS. 1 to 3). In the current collector 1300, the first current collecting portion 1310, the connection portion 1330, and the second current collecting portion 1320 may be sequentially arranged in the longitudinal direction (e.g., major axis) of the rectangle (which may coincide with the longitudinal direction of the electrode assembly 1200).

The first current collecting portion 1310 is connected and in particular welded to the plurality of first foil tabs 1220. The plurality of first foil tabs 1220 may be bent onto the first current collecting portion 1310 (e.g., the upper surface thereof facing away from the electrode portion 1210) and connected/welded thereto, e.g., as illustrated in FIG. 2.

The second current collecting portion 1320 is connected and in particular welded to the plurality of second foil tabs 1230. The plurality of second foil tabs 1230 may be bent onto the second current collecting portion 1320 (e.g., the upper surface thereof facing away from the electrode portion 1210) and connected/welded thereto, e.g., as illustrated in FIG. 2.

For example, the current collector 1300 may include a lower surface 1300a facing the electrode assembly 1200. The lower surface 1300a may also be referred to as a "first surface." The current collector 1300 may include an upper surface including upper surfaces 1310a and 1320a of the first current collecting portion 1310 and the second current collecting portion 1320, respectively. The plurality of first foil tabs 1220 and the plurality of second foil tabs 1230 are welded to the upper surface 1310a and 1320a, respectively. The upper surface of the current collector (the upper surfaces 1310a and 1320a) may be referred to as a "second surface." The upper surfaces 1310a and 1320a may be opposite to the lower surface 1300a that faces the electrode assembly 1200. The upper surfaces 1310a and 1320a may face the terminals 1420 and 1420a. The upper surfaces 1310a and 1320a may include (or form) a first weld surface 1310a to which the plurality of first foil tabs 1220 are welded. The first weld surface 1310a may be an upper surface of the first current collecting portion 1310. The upper surfaces 1310a and 1320a may include (or form) a second weld surface 1320a to which the plurality of second foil tabs 1230 are welded. The second weld surface 1320a may be an upper surface of a second current collecting portion 1320.

The connection portion 1330 may be located between the first current collecting portion 1310 and the second current collecting portion 1320. The first current collecting portion 1310 and the second current collecting portion 1320 may be respectively connected to opposite sides of the connection portion 1330. Because the first current collecting portion 1310 and the second current collecting portion 1320 are spaced apart from each other by the connection portion 1330, the plurality of first foil tabs 1220 and the plurality of second foil tabs 1230 may not interfere with each other when welded to the first current collecting portion 1310 and the second current collecting portion 1320, respectively.

In some examples, the first current collecting portion 1310, the second current collecting portion 1320, and the connection portion 1330 may be integrally formed. The first current collecting portion 1310 may be a portion (e.g., a segment) of the current collector 1300 that is located on one side of the connection portion 1330. The second current collecting portion 1320 may be a portion (e.g., a segment) of the current collector 1300 that is located on a remaining side of the connection portion 1330.

The current collector 1300 may be provided as a pair, e.g., a first current collector for the first and second foil tabs 1220 and 1230 and a second current collector for the third and fourth foil tabs 1240 and 1250. One or both of the first and second current collectors may be embodied as described below for the current collector 1300 with reference of FIGS. 6A/B and 7.

The material of each current collector 1300 (or of the current collector 1300) may be the same as that of one or both of the first and second foil tabs 1220 and 1230, and/or of one or both of the third or fourth foil tabs 1240 or 1250. Additionally or alternatively, the current collector(s) 1300 may for example be formed of aluminum, or may be formed of copper or nickel.

The foregoing description pertaining to welding of the first and second foil tabs 1220 and 1230 to a (second) current collector 1300 may be applied in the same manner to welding of the third and fourth foil tabs 1240 and 1250 to the current collector 1300. For example, the third foil tabs 1240 may be welded to the first weld surface 1310a of the first current collecting portion 1310 of the second current collector 1300. The fourth foil tabs 1250 may be welded to the second weld surface 1320a of the second current collecting portion 1320 of the second current collector 1300.

A current collecting protrusion 1331 may be provided on the connection portion 1330, e.g., protruding from the connection portion 1330 towards the cap assembly 1400 (e.g., upwards). The current collecting protrusion 1331 may be electrically connected to an electrode terminal (e.g., the respective one of the electrode terminals 1420, 1420a of FIGS. 1 and 2). The material of the current collecting protrusion 1331 may be the same as or different from that of the connection portion 1330. For example, both the connection portion 1330 and the current collecting protrusion 1331 may be formed of aluminum. Alternatively, the connection portion 1330 may be formed of copper, and the current collecting protrusion 1331 may be formed of aluminum. In the case where the material of the current collecting protrusion 1331 is the same as that of the connection portion 1330, the connection portion 1330 and the current collecting protrusion 1331 may be integrally formed.

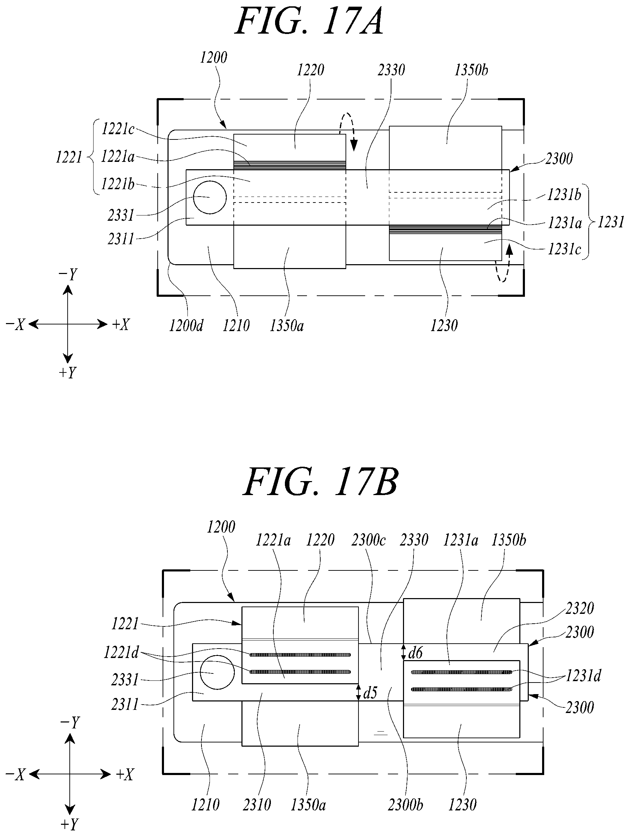

The current collecting protrusion 1331 may be disposed between the first current collecting portion 1310 and the second current collecting portion 1320 as in the example of FIGS. 6A and 6B. In other examples, the current collection protrusion 1331 may be provided in a lateral portion of the current collector adjacent to one of the first current collecting portion 1310 and the second current collecting portion 1320 as in the example of FIG. 17A and 17B described below.

The current collector 1300 may have a thickness ranging from 0.5 mm to 3.0 mm. In the present disclosure, the current collector 1300 is positioned on the electrode portion 1210 (e.g. the first/upper side thereof). The foil tabs 1220 and 1230 may be placed on the current collector 1300 (e.g., the upper surface 1310a, 1320a thereof facing away from the electrode portion 1210), and welding may be performed from an upper side of the foil tabs 1220 and 1230, thereby ensuring a sufficient thickness of the current collector 1300. For example, since the welding may not have to be performed through the current collector 1300 (e.g., as for welding foil tabs to a bottom surface thereof as in the related art, which may require melting a bottom portion of the current collector 1300 in contact with the foil tabs below the current collector 1300), the current collector 1300 may be made thicker. Accordingly, the durability of the secondary battery may also be improved.

A width of the current collector 1300 (e.g., as measured in the width direction of the electrode assembly 1200 and/or along a short/minor axis of the base of the current collector 1300) may be 0.5 to 0.8 times that of the electrode assembly 1200. The first and second current collecting portions 1310, 1320 and, optionally the connection portion 1300 may have a same width (i.e., the current collector 1300 may have a uniform width along its length) as illustrated in FIG. 6B.

In the present disclosure, since the foil tabs are placed on the current collector 1300 and welding is performed from the upper side of the foil tabs, there is no risk of damaging the separators provided in the electrode portion.

In the related art, because welding is performed after placing the current collector on the foil tabs (e.g., such that the foil tabs are arranged on a bottom surface of the current collector), high laser output is required to transmit heat to the foil tabs located under the current collector. However, in the present disclosure, the foil tabs are placed on the current collector (e.g., on the upper surface thereof), enabling welding with relatively low output. Since in the present disclosure, it is unnecessary to melt even a lower portion of the current collector, the thickness of the current collector may be increased to protect the separators, thereby improving the durability of the secondary battery.

According to an embodiment of the present disclosure, because the foil tabs 1220, 1230, 1240, and 1250 are welded on the upper surfaces 1310a and 1320a of the current collector 1300, which do not face the electrode assembly 1200, sparks or foreign substances generated during the welding process may be prevented from penetrating into the electrode assembly 1200. Accordingly, damage to the separators can be reduced.

As shown in FIG. 7, an insulator 1340 (as an example of a protective member/layer) may be located under the current collector 1300, for example so as to be arranged between the current collector 1300 and the electrode portion 1210. The insulator 1340 may be an insulating plate or an insulating film. The insulator 1340 can further reliably protect the foil tabs 1220 and 1230 and the electrode portion 1210 (as well as, e.g., the current collector 1300 and the foil tabs 1240 and 1250).

For example, the insulator/protective member 1340 may be provided such that the foil tabs 1220, 1230, 1240, and 1250 and the current collector 1300 are placed on one side of the insulator/protective member 1340, and the electrode portion (e.g., the electrode portion 1210 of FIG. 3) of the electrode assembly 1200 is placed on a remaining side of the protective layer 1340, thereby electrically insulating the electrode portion 1210 from the current collector 1300 and preventing electrical interference among the foil tabs 1220, 1230, 1240, and 1250, the current collector 1300, and the electrode portion 1210.

The cap assembly 1400 may seal the opening of the casing 1100 in which the electrode assembly 1200 is accommodated. The cap assembly 1400 may includes a cap plate 1410 and terminals (also referred to as electrode terminals) 1420 and 1420a (e.g., as illustrated in FIGS. 1 and 2). The terminals 1420 and 1420a may for example connect the electrode assembly 1200 to an external device.

The cap plate 1410 may have a plate shape that covers the opening of the casing 1100. The cap plate 1410 may have a shape corresponding to that of the opening of the casing 1100. The cap plate 1410 may be formed of the same material as the casing 1100. The cap plate 1410 may be fixed to the casing 1100 by a method such as welding, e.g., laser welding.

The cap plate 1410 may be formed with a vent hole 1411 and/or an electrolyte injection hole 1412. The vent hole 1411 may open when an internal pressure of the casing 1100 exceeds a reference value. In the present embodiment, the vent hole 1411 is formed in the cap plate 1410, but in other embodiments, the vent hole 1411 may be formed in the casing 1100. Electrolyte can be injected into the casing 1100 through the electrolyte injection hole 1412 (which in some examples may also be formed in the casing 1100).

The terminals 1420 and 1420a may be formed to protrude from the cap plate 1410 (e.g., arranged on an upper surface thereof facing away from the electrode assembly 1200 as illustrated in FIGS. 1 and 2) . The terminals 1420 and 1420a are respectively electrically connected to the foil tabs 1220, 1230, 1240 and 1250 through the current collectors 1300 (e.g., such that terminal 1420 is electrically connected to the first and second foil tabs 1220, 1230 through a first current collector and terminal 1420a is electrically connected to the third and fourth foil tabs 1240, 1250 through a second current collector). The terminals 1420 and 1420a may each have a plate shape in a circular or rectangular form.

A through hole may be formed in each of the terminals 1420 and 1420a. Each current collecting protrusion 1331 may be inserted into the corresponding through hole, for example such that an (e.g. upper) end of the current collecting protrusion 1331 is exposed at an (e.g., upper) surface of the respective terminal as illustrated in FIG. 1). After the current collecting protrusion 1331 is inserted into the through hole, the current collecting protrusion 1331 and the terminal 1420/1420a may be welded to each other. For example, an outer peripheral surface of an (e.g., upper) end of the current collecting protrusion 1331 and an inner peripheral surface of an end of the through hole may be welded.

Insulators may be respectively positioned between the terminals 1420 and 1420a and the cap plate 1410. The insulators electrically insulate the terminals 1420 and 1420a and the cap plate 1410 from each other.

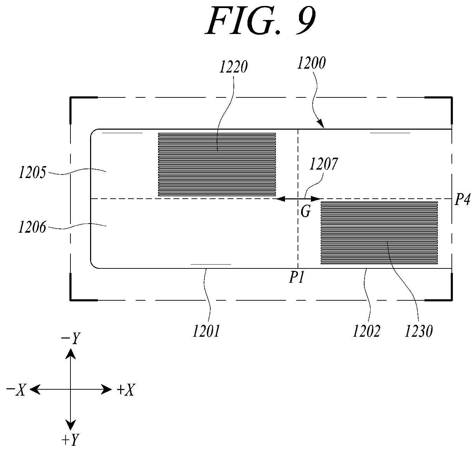

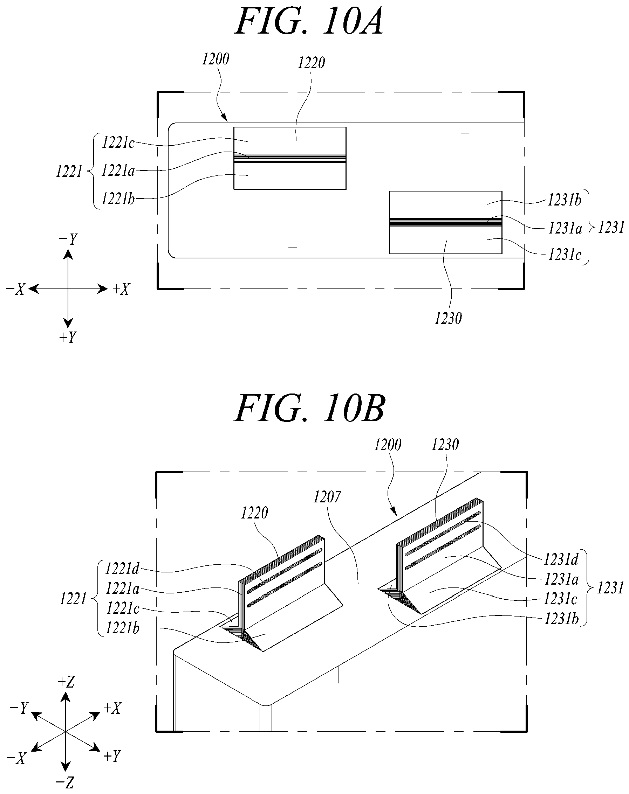

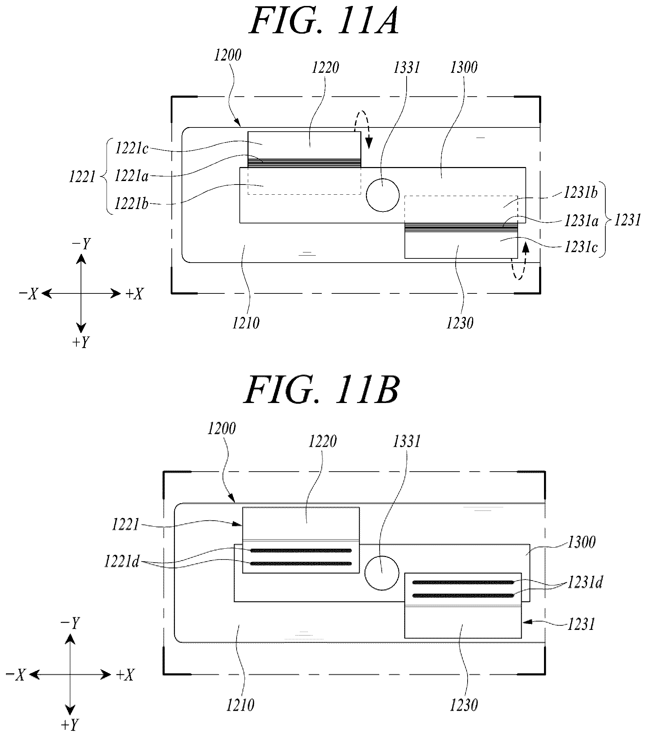

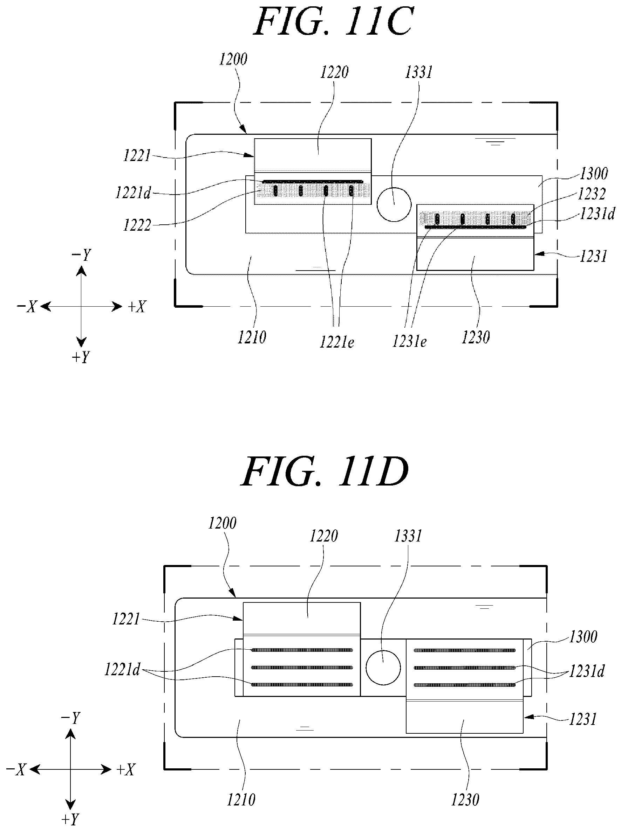

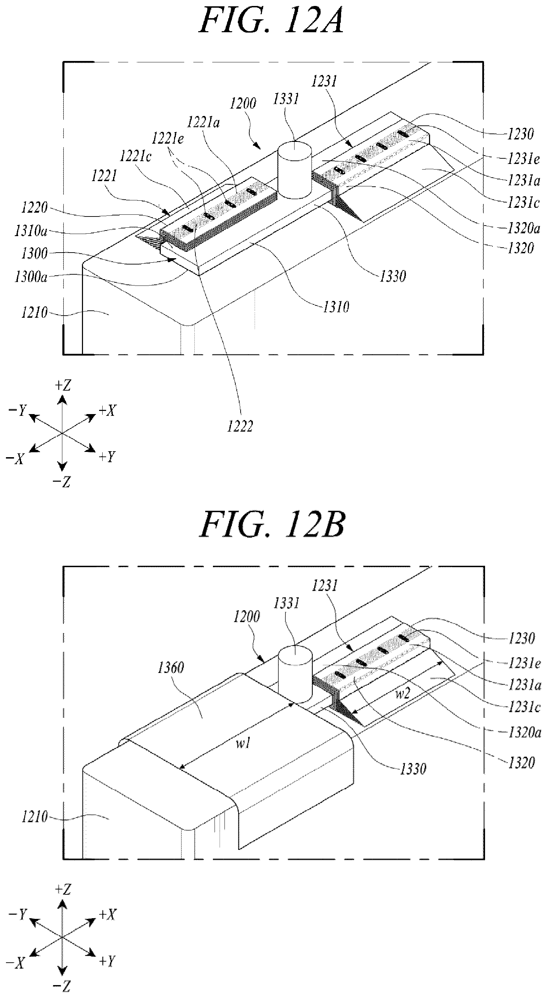

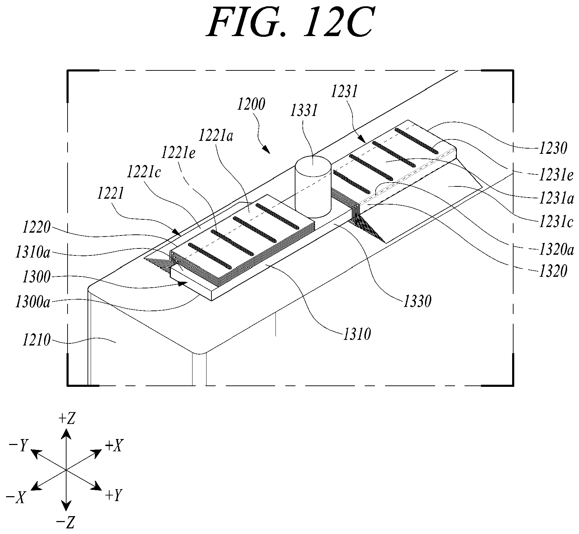

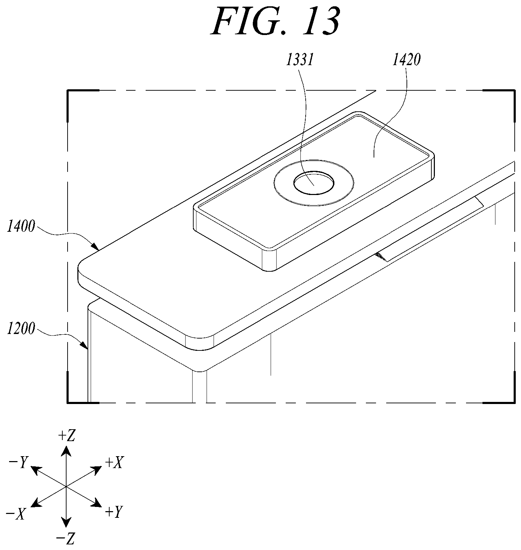

FIG. 8 is a flowchart showing a method of manufacturing a secondary battery according to an embodiment of the present disclosure, which may for example be used for manufacturing a secondary battery according to any one of the embodiments described herein such as the secondary battery 1000 described above. FIG. 9 is a view illustrating the plurality of first electrode tabs (e.g., first foil tabs) and the plurality of second electrode tabs (e.g., second foil tabs) that are respectively grouped, in the secondary battery according to an embodiment of the present disclosure. FIGS. 10A and 10B are views illustrating the plurality of first electrode tabs and the plurality of second electrode tabs that are respectively subjected to primary welding, in the secondary battery according to an embodiment of the present disclosure. FIGS. 11A, 11B and 11D are views illustrating the current collector placed between the plurality of first electrode tabs and the plurality of second electrode tabs, in the secondary battery according to embodiments of the present disclosure. FIGS. 11C, 12A, 12B and 12C are views illustrating the current collector and the first and second electrode tabs that are welded to each other, in the secondary battery according to embodiments of the present disclosure. FIG. 13 is a view illustrating the cap assembly coupled to the electrode assembly, in the secondary battery according to an embodiment of the present disclosure.

A method of assembling the first foil tab 1220, the second foil tab 1230, the current collector 1300, and the terminal 1420, which is described with reference to FIGS. 8 to 13 below, may also be equally applied to a method of assembling the third foil tab 1240, the fourth foil tab 1250, the current collector 1300, and the terminal 1420a, as shown in FIG. 2.

Referring to FIGS. 8 and 9, the method of manufacturing the secondary battery according to an embodiment of the present disclosure may include step S1100 of preparing the electrode assembly.

As illustrated in FIG. 8, to manufacture the secondary battery according to an embodiment of the present disclosure, the electrode assembly 1200 is prepared (e.g., provided and/or manufactured) (S1100). The electrode assembly 1200 includes the electrode portion 1210, and the plurality of first electrode tabs (for example embodied and in the following referred to as first foil tabs) 1220 and the plurality of second electrode tabs (for example embodied and in the following referred to as second foil tabs) 1230, which are formed on one end (e.g., a first/upper side) of the electrode portion 1210, for example as described above for the secondary battery 1000.

The plurality of first foil tabs 1220 and the plurality of second foil tabs 1230 are placed on the one end (e.g., a first/upper side) of the electrode portion 1210 (for example in the first region 1201 of the electrode assembly 1200). When a plurality of electrode plates (including, e.g., the plurality of first electrode plates 1211 of FIG. 4A and the plurality of second electrode plates 1212 of FIG. 4B) forming the electrode portion 1210 are stacked (e.g., to form the first stack portion 1205 and the second stack portion 1206, respectively), the plurality of first foil tabs 1220 overlap one another at a first position (e.g., in the first region 1201), and the plurality of second foil tabs 1230 overlap one another at a second position (e.g., in the second region 1202), for example as described above. In other words, the plurality of first foil tabs 1220 are grouped at the first position, and the plurality of second foil tabs 1230 are grouped at the second position. The first position and the second position are spaced apart from each other on the electrode plates (e.g., in the longitudinal direction as an example of a second/displacement direction). The plurality of first foil tabs 1220 that are grouped and the plurality of second foil tabs 1230 that are grouped may be spaced apart in the width direction and the longitudinal direction of the electrode assembly 1200, e.g., as illustrated in FIG. 9. As illustrated in FIG. 9, the plurality of first foil tabs 1220 that are grouped may be placed on one end in the width direction of the electrode assembly (e.g., adjacent to a first (long) edge of the electrode assembly). The plurality of second foil tabs 1230 that are grouped may be placed on a remaining end in the width direction of the electrode assembly 1200 (e.g., adjacent to a second (long) edge of the electrode assembly opposite to the first edge).

In some examples, although only one foil tab 1220, 1230, 1240, or 1250 is formed on each of the electrode plates 1211, 1212, 1213, or 1214, in the secondary battery 1000 according to an embodiment of the present disclosure, two foil tab groups having different positions may be formed on each of the positive and negative electrodes after stacking the electrode plates 1211, 1212, 1213, and 1214, by varying the positions at which the foil tabs 1220, 1230, 1240, and 1250 are formed on the respective electrode plates 1211, 1212, 1213, and 1214. In other embodiments, two or more foil tabs formed at different positions may be provided on the same polarity side.

In some examples, the grouped plurality of first foil tabs 1220 may be located in the first region 1201 of the first stack portion 1205. The grouped plurality of second foil tabs 1230 may be located in the second region 1202 of the second stack portion 1206. The plurality of first foil tabs 1220 and the plurality of second foil tabs 1230 may be spaced apart from each other in the longitudinal direction (e.g., the +X direction) of the electrode assembly 1200. As illustrated in FIG. 9, a gap G may be formed between the plurality of first foil tabs 1220 and the plurality of second foil tabs 1230. The electrode assembly 1200 may include a bridge portion 1207 formed between the plurality of first foil tabs 1220 and the plurality of second foil tabs 1230. The bridge portion 1207 may be a portion of the electrode assembly 1200 located between the first foil tabs 1220 and the second foil tabs 1230, which are spaced apart in the longitudinal direction (e.g., the +X direction). The bridge portion 1207 may provide a position at which the current collecting protrusion (e.g., the current collecting protrusion 1331 of FIG. 6) of the current collector (e.g., the current collector 1300 of FIG. 6) protrudes. The connection portion (e.g., the connection portion 1330 of FIG. 6) of the current collector (e.g., the current collector 1300 of FIG. 6) may be disposed to correspond to the bridge portion 1207. The current collecting protrusion (e.g., the current collecting protrusion 1331 of FIG. 6) of the current collector may protrude toward the corresponding terminal (e.g., the terminal 1420 of FIG. 2) at a position corresponding to the bridge portion 1207.

Referring to FIGS. 8 and 10A/B, a method of manufacturing the secondary battery according to embodiments of the present disclosure may include step S1200 of performing primary welding (pre-welding).

The plurality of first foil tabs 1220 may be welded (pre-welded) to one another among the first foil tabs 1220. The plurality of second foil tabs 1230 may welded to one another among the second foil tabs 1230 (S1200). The plurality of first foil tabs 1220 and the plurality of second foil tabs 1230 may be aligned (e.g., arranged) to be spaced apart from each other in the longitudinal direction of the electrode assembly 1200. The plurality of foil tabs that are grouped and aligned are primarily welded (pre-welded/welded first) such that the first foil tabs 1220 are welded to one another among the first foil tabs 1220, and the second foil tabs 1230 are welded to one another among the second foil tabs 1230 (see FIGS. 10A/B).

The plurality of first foil tabs 1220 and the plurality of second foil tabs 1230 may each be pre-welded to one another at one or more (first and second, respectively, pre-welding areas (e.g., a pair of pre-welding areas each as in the examples of FIGS. 10B, 11B) or three pre-welding areas each as in the example of FIG. 11D) or between two and ten pre-welding areas each). The pre-welding areas may form (or be comprised in) a first and second assembly weld portion (pre-welding portion) 1221d/1231d, respectively (or a plurality of first assembly weld portions 1221d and/or a plurality of second assembly weld portions 1231d). In the example of FIGS. 10A/B, the pre-welding areas may for example be welding lines (e.g., elongate welding areas) extending in the longitudinal direction (and/or the displacement/second direction), e.g., as illustrated by the dark (hatched) lines on the side faces of the respective plurality of foil tabs in FIG. 10B.

In some examples, the plurality of first foil tabs 1220 and the plurality of second foil tabs 1230 may be foil tabs having the same polarity. In order to stably weld a large number of first and second foil tabs 1220 and 1230, the plurality of first foil tabs may be primarily welded (pre-welded) to one another among the first foil tabs 1220, and the plurality of second foil tabs 1230 may be primarily welded (pre-welded) to one another among the second foil tabs 1230. Thereafter, the first and second foil tabs 1220 and 1230 may be welded (secondarily welded) on the corresponding current collector (e.g., as described below for the current collector 1300 in FIGS. 11A-D).

In some examples, the plurality of third foil tabs (e.g., the third foil tabs 1240 of FIG. 3) and the plurality of fourth foil tabs (e.g., the fourth foil tabs 1250 of FIG. 3) may be foil tabs having the same polarity. As in the case of the plurality of first foil tabs 1220 and the plurality of second foil tabs 1230, the plurality of third foil tabs 1240 may be primarily welded (pre-welded) to one another among the third foil tabs 1240, and the plurality of fourth foil tabs 1250 may be primarily welded (pre-welded) to one another among the fourth foil tabs 1250. Thereafter, the third and fourth foil tabs 1240 and 1250 may be welded (secondarily welded) on the corresponding current collector 1300. The plurality of foil tabs 1220, 1230, 1240, and 1250, which overlap at the respective positions, may each be primarily welded by ultrasonic welding, laser welding, or the like, for example to facilitate current flow.

Referring to FIGS. 10A/B, the electrode assembly 1200 may include a first foil tab assembly 1221 in some examples. The first foil tab assembly 1221 may be a structure in which the plurality of first foil tabs 1220 are pre-welded to each other. In other words, the first foil tab assembly 1221 may be an assembly in which the plurality of first foil tabs 1220 that overlap each other are primarily welded.

In some examples, the first foil tab assembly 1221 may include a first-1 assembly portion 1221a. The first-1 assembly portion 1221a may be a portion in which the plurality of first foil tabs 1220 that overlap each other are pre-welded. The first foil tab assembly 1221 may include a first assembly weld portion 1221d (which may, e.g., comprise and/or be formed by the one or more pre-welding areas). The first assembly weld portion 1221d may be formed in the first-1 assembly portion 1221a.

In some examples, the first foil tab assembly 1221 may include a first-2 assembly portion 1221b and/or a first-3 assembly portion 1221c. The first-2 assembly portion 1221b may be a portion extending in one direction (e.g., the +Y direction) from the first-1 assembly portion 1221a (for example towards a center plane of the electrode assembly 1200, e.g., the plane P4 illustrated in FIG. 3). The first-3 assembly portion 1221c may be a portion extending from the first-1 assembly portion 1221a in a direction (e.g., the -Y direction) opposite to the first-2 assembly portion 1221b (e.g., on a far side of the first-1 assembly portion as seen from the center plane/the current collector 1300). The first-3 assembly portion 1221c may extend in a direction toward the outer side of the electrode assembly 1200, that is, in a direction opposite to the direction toward the second stack portion 1206 with respect to the width direction of the electrode assembly 1200.

In some examples, the electrode assembly 1200 may include a second foil tab assembly 1231. The second foil tab assembly 1231 may be a structure in which the plurality of second foil tabs 1230 are welded to each other. In other words, the second foil tab assembly 1231 may be an assembly in which the plurality of second foil tabs 1230 that overlap each other are primarily welded.

Referring to FIGS. 10A/B, the second foil tab assembly 1231 may include a second-1 assembly portion 1231a in some examples. The second-1 assembly portion 1231a may be a portion in which the plurality of second foil tabs 1230 that overlap each other are welded. The second foil tab assembly 1231 may include a second assembly weld portion 1231d (which may, e.g., comprise and/or be formed by the one or more pre-welding areas). The second assembly weld portion 1231d may be formed in the second-1 assembly portion 1231a.

In some examples, the second foil tab assembly 1231 may include a second-2 assembly portion 1231b and/or a second-3 assembly portion 1231c, which may for example be embodied as described above for the first foil tab assembly 1231. The second-2 assembly portion 1231b may be a portion extending in one direction (e.g., the -Y direction) from the second-1 assembly portion 1231a. The second-3 assembly portion 1231c may be a portion extending from the second-1 assembly portion 1231a in a direction (e.g., the +Y direction) opposite to the second-2 assembly portion 1231b. The second-3 assembly portion 1231c may extend in a direction toward the outer side of the electrode assembly 1200, that is, in a direction opposite to the direction toward the first stack portion 1205 with respect to the width direction of the electrode assembly 1200.

Referring to FIGS. 8, 11A-D and 12A-C, the method of manufacturing the secondary battery according to an embodiment the present disclosure may include step S1300 of placing the current collector 1300, step S1400 of bending the first foil tabs 1220 and the second foil tabs 1230 onto the first and second current collection portion 1310, 1320, respectively, and step S1500 of welding the current collector 1300 and the foil tabs 1220 and 1230.

FIG. 11A depicts the electrode assembly 1200 with the current collector 1300 placed between the plurality of first foil tabs 1220 and the plurality of second foil tabs 1230. FIG. 11B depicts the electrode assembly 1200 with the plurality of first foil tabs 1220 and the plurality of second foil tabs 1230 bent onto the current collector 1300. FIG. 11C depicts the electrode assembly 1200 after welding the plurality of first foil tabs 1220 and the plurality of second foil tabs 1230 to the current collector 1300. FIGS. 12A and 12B show perspective views of the electrode assembly 1200 after welding the plurality of first foil tabs 1220 and the plurality of second foil tabs 1230 to the current collector 1300 similar to FIG. 11C. FIGS. 11D and 12C depict an alternative embodiment to the one of FIG. 11B/C, where the first and second foil tabs 1220, 1230 extend across a larger part of the width of the current collector 1300 and three pre-welding areas per plurality of foil tabs are used instead of two pre-welding areas per plurality of foil tabs in the example of FIG. 11B/C.

The current collector 1300 may be placed between the plurality of first foil tabs 1220 and the plurality of second foil tabs 1230 that are primarily welded (S1300), e.g., along the width direction such that the plurality of first foil tabs 1220 is arranged at a first side (e.g., a first long side) of the current collector 1300 and the plurality of second foil tabs 1230 is arranged at a second side (e.g., a second long side) of the current collector 1300 opposite to the first side as illustrated in FIG. 11A. To connect the plurality of foil tabs 1220 and 1230 to the current collector 1300, in the present embodiment, the foil tabs 1220 and 1230 having the same polarity are divided into two groups (e.g., the first and second foil tab assemblies 1221, 1231) and welded to the current collector 1300.

For example, the first foil tab assembly 1221 may be welded to the first current collecting portion of the current collector 1300 (e.g., the first current collection portion 1310 of FIGS. 12A-C), and the second foil tab assembly 1231 may be welded to the second current collecting portion of the current collector 1300 (e.g., the second current collection portion 1320 of FIGS. 12A-C).

A space (e.g., at least in the longitudinal/displacement direction) is formed between the plurality of first foil tabs 1220 and the plurality of second foil tabs 1230 that are primarily welded, on the one end of the electrode portion 1210. To facilitate the placement of the current collector 1300, the plurality of first foil tabs 1220 that are welded and the plurality of second foil tabs 1230 that are welded may be bent toward outer sides of the electrode assembly 1200, respectively (e.g., away from where the current collector 1300 is to be placed). The current collector 1300 is placed between the first foil tabs 1220 and the second foil tabs 1230, e.g., as illustrated in FIG. 11A.

The first foil tabs 1220 and the second foil tabs 1230 are each bent toward an upper surface of the current collector 1300 (S1400, FIG. 11B). The plurality of first foil tabs 1220 are bent onto an upper surface 1321a of the first current collecting portion 1310 of the current collector 1300 (see also FIG. 12A). The plurality of second foil tabs 1230 are bent onto an upper surface 1320a of the second current collecting portion 1320 of the current collector 1300 (see also FIG. 12A). The plurality of first foil tabs 1220 and the plurality of second foil tabs 1230 are bent in opposite directions, e.g., the plurality of first foil tabs 1220 in a first direction (also referred to as bending direction, which may coincide with the width direction of the electrode assembly 1200) and the plurality of first foil tabs 1220 in direction opposite to the first direction (e.g., the negative first/bending direction).

The current collector 1300 and the first and second foil tabs 1220 and 1230 placed on the current collector 1300 are connected and in particular welded (S1500, FIGS. 11C, 12A, 12C). The plurality of first foil tabs 1220 are welded to the first current collecting portion 1310. The plurality of second foil tabs 1230 are welded to the second current collecting portion 1320. The welding may be performed from upper sides of the plurality of first foil tabs 1220 and the plurality of second foil tabs 1230. A method such as ultrasonic welding, laser welding, or the like may be used for the welding.

During the welding, in the first current collecting portion 1310 of the current collector 1300, welding may be performed from the plurality of first foil tabs 1220 toward the first current collecting portion 1310, and in the second current collecting portion 1320 of the current collector 1300, welding may be performed from the plurality of second foil tabs 1230 toward the second current collecting portion 1320.

The first and second current collecting portion 1310, 1320 may each be welded to the plurality of first and second electrode tabs 1220, 1230, respectively, at one or more (first and second, respectively) welding areas (e.g., four welding areas each as in the examples of FIG. 11C, 12A, 12C or between two and ten welding areas each). The welding areas may form (or be comprised in) a first and second collector weld portion 1221e/ 1231e, respectively (or a plurality of first collector weld portions 1221e and/or a plurality of second collector weld portions 1231e)

The first and second welding areas may for example be welding lines (e.g., elongate welding areas) extending in the width direction (and/or the first/bending direction), e.g., as illustrated by the dark (hatched) lines on the upper faces of the respective plurality of foil tabs in FIGS. 11C, 12A-C. The first and second welding areas may extend perpendicular or substantially perpendicular to the one or more pre-welding areas, e.g., as in the examples of FIG. 11B and 11C.

In other examples, the first and second welding areas may for example be welding lines (e.g., elongate welding areas) extending in the longitudinal direction (and/or the second/displacement direction), e.g., similar to the pre-welding areas illustrated in FIGS. 11B or 11D. The first and second welding areas may extend parallel or substantially parallel to the one or more pre-welding areas.

At least parts of the one or more pre-welding areas may not overlap with any of the one or more welding areas, for example due to their different arrangement and/or number and/or due to their different orientation (e.g., as in the examples of FIGS. 11B, 11C, 12A and 12C).

The first welding areas may (collectively) extend over (e.g., cover) between 5% and 50%, preferably between 10% and 25%, most preferably between 15% and 20% of a surface area of the current collector 1300 that is covered by (and/or in contact with) the plurality of first electrode tabs 1220. The second welding areas may (collectively) extend over (e.g., cover) between 5% and 50%, preferably between 10% and 25%, most preferably between 15% and 20% of a surface area of the current collector 1300 that is covered by (and/or in contact with) the plurality of second electrode tabs 1230.

The plurality of first electrode tabs 1220 and the plurality of second electrode tabs 1230 may extend on the upper surface of the first and second current collecting portion 1310, 1320, respectively, across part of the width of the current collector 1300 in the respective current collecting portion 1310, 1320 along the first/bending direction as illustrated in FIGS. 11C and 12A, for example across at least 50%, in some examples across at least 75% of the width. In other examples, the plurality of first electrode tabs 1220 and the plurality of second electrode tabs 1230 may extend on the upper surface of the first and second current collecting portion 1310, 1320, respectively, across the entire width or substantially the entire width (e.g., across at least 90% of the width) of the current collector 1300 in the respective current collecting portion 1310, 1320 along the first/bending direction as illustrated in FIGS. 11D and 12C, for example such that edges of the plurality of first electrode tabs 1220 and of the first current collecting portion 1310 and edges of the plurality of second electrode tabs 1230 and of the second current collecting portion 1320 are aligned with each other (e.g., as seen along the vertical direction as in FIG. 11D). A number of pre-welding areas may be chosen depending on the length of the foil tabs (e.g., by which the foil tabs protrude from the electrode assembly) / the part of the width of the current collector covered by the foil tabs, e.g., two in the example of FIG. 11B and three in the example of FIG. 11D.

In some examples, referring to FIG. 11A, the current collector 1300 may be disposed to cover at least a portion of the first foil tab assembly 1221 and at least a portion of the second foil tab assembly 1231. The current collector 1300 may overlap, as seen along the vertical direction (e.g., the +Z direction), each of at least a portion of the first foil tab assembly 1221 and at least a portion of the second foil tab assembly 1231. For example, the current collector 1300 may be disposed to cover the first-2 assembly portion 1221b and the second-2 assembly portion 1231b. The first-2 assembly portion 1221b may be located between the electrode portion 1210 of the electrode assembly 1200 and the current collector 1300. The second-2 assembly portion 1231b may be located between the electrode portion 1210 of the electrode assembly 1200 and the current collector 1300. The current collecting protrusion 1331 may protrude between the first-2 assembly portion 1221b and the second-2 assembly portion 1231b. The current collector 1300 may be disposed in space formed between the first foil tab assembly 1221 and the second foil tab assembly 1231 (e.g., along the width direction). To facilitate placement of the current collector 1300, each of the first foil tab assembly 1221 and the second foil tab assembly 1231 may be temporarily bent toward the outer side of the electrode assembly 1200.

In some examples, referring to FIGS. 8 and 11B, the first foil tab assembly 1221 may be bent onto the first weld surface 1310a of the first current collecting portion 1310 (see also FIG. 12A). The first-1 assembly portion 1221a may be bent onto the first weld surface 1310a. The first-1 assembly portion 1221a may be bent toward the second stack portion (e.g., the second stack portion 1206 in FIG. 3). In this case, the first-2 assembly portion 1221b may be positioned between the lower surface 1300a of the current collector 1300 and the electrode portion 1210 of the electrode assembly 1200, so that the bending of the first-1 assembly portion 1221a may be supported by the first-2 assembly portion 1221b pressed by the current collector 1300. The first-3 assembly portion 1221c may extend in a direction away from the current collector 1300 from the first-1 assembly portion 1221a, thereby providing structural stability to the first foil tab assembly 1221. For example, the first-3 assembly portion 1221c may have a structure that spreads widely in the width direction (e.g., the -Y direction) of the first-1 assembly portion 1221a during the process of bending and welding the first-1 assembly portion 1221a, so as to disperse stress applied in the width direction to the first-1 assembly portion 1221a.

In some examples, referring to FIGS. 8 and 11B, the second foil tab assembly 1231 may be bent onto the second weld surface 1320a of the second current collecting portion 1320. The second-1 assembly portion 1231a may be bent onto the second weld surface 1320a. The second-1 assembly portion 1231a may be bent toward the first stack portion (e.g., the first stack portion 1205 of FIG. 3). In this case, the second-2 assembly portion 1231b may be positioned between the lower surface 1300a of the current collector 1300 and the electrode portion 1210 of the electrode assembly 1200, so that the bending of the second-1 assembly portion 1231a may be supported by the second-2 assembly portion 1231b pressed by the current collector 1300. The second-3 assembly portion 1231c may extend in a direction away from the current collector 1300 from the second-1 assembly portion 1231a, thereby providing structural stability of the second foil tab assembly 1231. For example, the second-3 assembly portion 1231c may have a structure that spreads widely in the width direction (e.g., the +Y direction) of the second-1 assembly portion 1231a during the process of bending and welding the second-1 assembly portion 1231a, so as to disperse stress applied in the width direction to the second-1 assembly portion 1231a.

In some examples, referring to FIGS. 11C and 12A, the first-2 assembly portion 1221b may be located between a first collector weld portion 1221e and the electrode assembly 1200. The second-2 assembly portion 1231b may be located between the second collector weld portion 1231e and the electrode assembly 1200. The first current collecting portion 1310 may be located between the first collector weld portion 1221e and the first-2 assembly portion 1221b. The second current collecting portion 1320 may be located between a second collector weld portion 1231e and the second-2 assembly portion 1231b. Due to the above-described structure, foreign substances generated during welding of the first-1 and second-1 assembly portions 1221a and 1231a to the current collector 1300 may be blocked by the first-2 and second-2 assembly portions 1221b and 1231b and thus may be prevented from heading to the electrode assembly 1200.

In some examples, referring to FIGS. 8, 11C and 12A, a plurality of first foil tabs 1220 may be welded to the first current collecting portion 1310. A plurality of second foil tabs 1230 may be welded to the second current collecting portion 1320. The welding may be performed from a position above the plurality of first foil tabs 1220 and the plurality of second foil tabs 1230 toward a downward direction. The welding may employ a method such as ultrasonic welding or laser welding. During welding, at the first current collecting portion 1310 of the current collector 1300, the welding may proceed from the plurality of first foil tabs 1220 toward the first current collecting portion 1310, and at the second current collecting portion 1320 of the current collector 1300, the welding may proceed from the plurality of second foil tabs 1230 toward the second current collecting portion 1320.

In some examples, referring to FIG. 11C and 12A, the first foil tab assembly 1221 may be welded to the first current collecting portion 1310, and the second foil tab assembly 1231 may be welded to the second current collecting portion 1320. The first foil tab assembly 1221 may include the first current collector weld portion 1221e. The first current collector weld portion 1221e may be formed in the first-1 assembly portion 1221a. The first current collector weld portion 1221e may be formed by welding the first foil tab assembly 1221 to the current collector 1300. The second foil tab assembly 1231 may include the second current collector weld portion 1231e. The second current collector weld portion 1231e may be formed in the second-1 assembly portion 1231a. The second current collector weld portion 1231e may be formed by welding the second foil tab assembly 1231 to the current collector 1300.

In some examples, referring to FIGS. 11C and 12A, after the first and second foil tab assemblies 1221 and 1231 are formed by primarily welding the plurality of foil tabs 1220 and 1230, the first and second foil tab assemblies 1221 and 1231 may be secondarily welded to the current collector 1300. Accordingly, the first and second foil tab assemblies 1221 and 1231 may include the first and second assembly weld portions 1221d and 1231d and the first and second current collector weld portions 1221e and 1231e. As the plurality of foil tabs 1220 and 1230 are welded in the above-described manner, all of the foil tabs 1220 and 1230 may be reliably welded to the current collector 1300 such that no unwelded foil tab remains among the foil tabs 1220 and 1230. The directions of the first welding and the second welding of the first and second foil tab assemblies 1221 and 1231 may differ from each other. For example, the first and second assembly weld portions 1221d and 1231d may be formed in one direction (e.g., the longitudinal direction / +X direction), and the first and second current collector weld portions 1221e and 1231e may be formed in another direction (e.g., the width direction / +Y direction). As described above, because the first welding direction and the second welding direction differ from each other, damage to the first and second foil tab assemblies 1221 and 1231, which may occur due to repetitive welding at the same location, may be prevented. The first and second assembly weld portions 1221d and 1231d may extend across the first and second foil tab assemblies 1221 and 1231 in a longitudinal direction (e.g., the +X direction). A plurality of first current collector weld portions/welding areas 1221e and a plurality of and second current collector weld portions/welding areas 1231e may be formed to be spaced apart from each other in the longitudinal direction (e.g., the +X direction) of the first and second foil tab assemblies 1221 and 1231. In the secondary battery 1000 according to an embodiment of the present disclosure, the assembly weld portions 1221d and 1231d formed by primarily welding (pre-welding) and the current collector weld portions 1221e and 1231e formed by secondarily welding may be distinguished from each other. For example, the assembly weld portions 1221d and 1231d formed by primarily welding and the current collector weld portions 1221e and 1231e formed by secondarily welding may be formed in directions crossing each other. The assembly weld portions 1221d and 1231d formed by primarily welding and the current collector weld portions 1221e and 1231e formed by secondarily welding may also be formed without directionality in different regions of the foil tab assemblies 1221 and 1231.

In the present embodiment, the plurality of foil tabs are primarily welded (pre-welded) such that the first foil tabs 1220 are welded to one another among the first foil tabs 1220 and the second foil tabs 1230 are welded to one another among the second foil tabs 1230, and thereafter welded to the current collector 1300. However, in other embodiments, without performing primary welding (pre-welding), the plurality of foil tabs 1220 and 1230 may be directly bent onto and welded to the current collector 1300.

For example, in a secondary battery according to other embodiments of the present disclosure, each of the plurality of foil tabs 1220 and 1230 may be welded to the current collector 1300 (e.g., in a single welding process for each of the plurality of foil tabs 1220 and 1230). That is, in the secondary battery according to other embodiments of the present disclosure, each of the plurality of foil tabs 1220 and 1230 may be bent toward a surface of the current collector 1300 such that the bent foil tabs 1220 are stacked on one another and the bent foil tabs 1230 are stacked on one another. Thereafter, the stacked foil tabs 1220 and the stacked foil tabs 1230 may be welded to the current collector 1300.

In some examples, referring to FIG. 11A-C and 12A, the collecting protrusion 1331 may be disposed between the first foil tab assembly 1221 and the second foil tab assembly 1231. The collecting protrusion 1331 may be disposed between the first-1 assembly portion 1221a and the second-1 assembly portion 1231a. The collecting protrusion 1331 may be disposed between the first current collector weld portion 1221e and the second current collector weld portion 1231e.

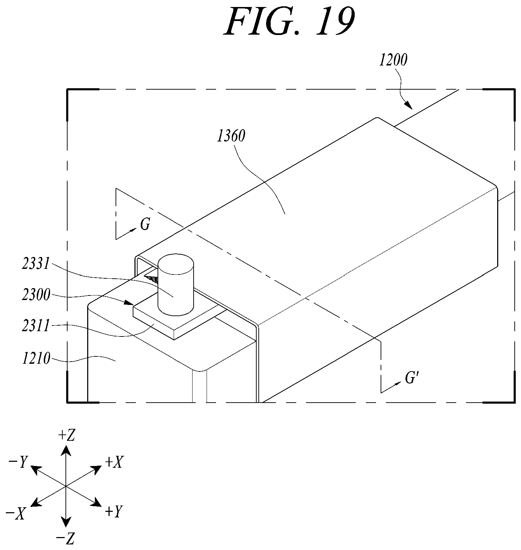

In some examples, referring to FIG. 12B, the method of manufacturing the secondary battery may include a step of placing a (joint or respective) cover 1360 on one or both of the plurality of first foil tabs 1220 and the plurality of second foil tabs 1230, e.g., as detailed below for step S2700 with reference to FIG. 19. The cover 1360 may for example be U-shaped so as to cover a top surface and upper portions of side surfaces of the electrode assembly 1200. A width w1 of the cover 1360 along the longitudinal direction may for example be chosen so as to fully cover the respective plurality of foil tabs 1220/1230, preferably so as to cover the entire respective current collecting portion 1310/1320 up to the current collecting protrusion 1331 (e.g., so as to be in contact with the current collecting protrusion 1331). The width w1 of the cover 1360 along the longitudinal direction may for example be between 1.0 and 1.2 times a width of the respective foil tabs 1220/1230 along the longitudinal direction.

The electrode assembly 1200 to which the current collector 1300 is welded is accommodated in the casing 1100. The cap assembly 1400 may seal the opening of the casing 1100. As illustrated in FIG. 13, after the current collecting protrusion 1331 is inserted into the through hole of the terminal 1420 of the cap assembly 1400, the outer circumferential surface of the end of the current collecting protrusion 1331 may be welded to the inner circumferential surface of the end of the through hole.

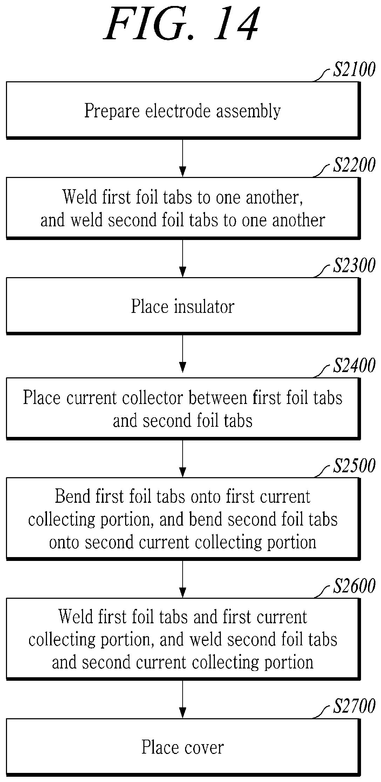

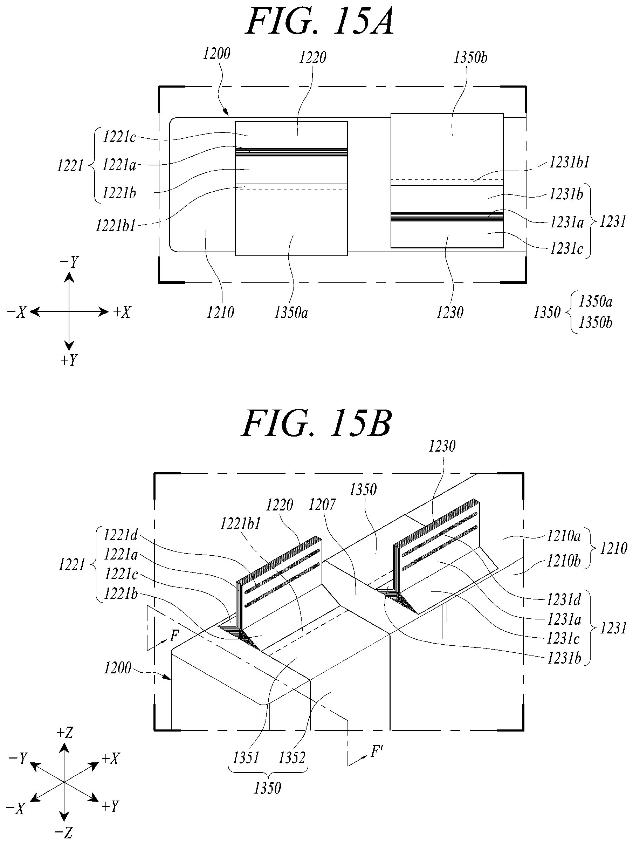

FIG. 14 is a flowchart showing a method of manufacturing a secondary battery according to another embodiment of the present disclosure. FIGS. 15 to 20 are views illustrating the method of manufacturing the secondary battery according to another embodiment of the present disclosure. The description of the method of manufacturing a secondary battery according to an embodiment of the present disclosure (which has been described with reference to FIGS. 1 to 13), e.g., any feature or combination of features thereof, may also be equally applied to the method of manufacturing the secondary battery according to another embodiment of the present disclosure described with reference to FIGS. 14 to 20, and vice-versa. The method of FIG. 14 may for example be used for manufacturing a secondary battery according to the present disclosure such as the secondary battery 1000 of FIG. 1.

Referring to FIGS. 14 to 20, the method of manufacturing the secondary battery may include step S2100 of preparing an electrode assembly 1200. The method of manufacturing the secondary battery may include step S2200 of (pre-)welding a plurality of first foil tabs 1220 (as an example for first electrode tabs) to one another among the first foil tabs 1220 and (pre-)welding a plurality of second foil tabs 1230 (as an example of second electrode tabs) to one another among the second foil tabs 1230. The method of manufacturing the secondary battery may include step S2300 of placing an insulator 1350 (as an example of a protective member). The method of manufacturing the secondary battery may include step S2400 of placing a current collector 2300 between the plurality of first foil tabs 1220 and the plurality of second foil tabs 1230. The method of manufacturing the secondary battery may include step S2500 of bending the plurality of first foil tabs 1220 toward a first current collecting portion 2310 and bending the plurality of second foil tabs 1230 toward a second current collecting portion 2320. The method of manufacturing the secondary battery may include step S2600 of welding the plurality of first foil tabs 1220 to the first current collecting portion 2310 and welding the plurality of second foil tabs 1230 to the second current collecting portion 2320. The method of manufacturing the secondary battery may include step S2700 of placing a cover 1360.

Referring to FIGS. 9, 10A/B, and 14, the method of manufacturing the secondary battery may include step S2100 of preparing the electrode assembly 1200, and step S2200 of welding the plurality of first foil tabs 1220 to one another among the first foil tabs 1220 and welding the plurality of second foil tabs 1230 to one another among the second foil tabs 1230. The contents described with reference to FIGS. 9 and 10A/B may be equally applied to the descriptions of the respective steps S2100 and S2200. For example, the plurality of first foil tabs 1220 may be welded to one another to form a first foil tab assembly 1221 including a first assembly weld portion 1221d, and the plurality of second foil tabs 1230 may be welded to one another to form a second foil tab assembly 1231 including a second assembly weld portion 1231d.

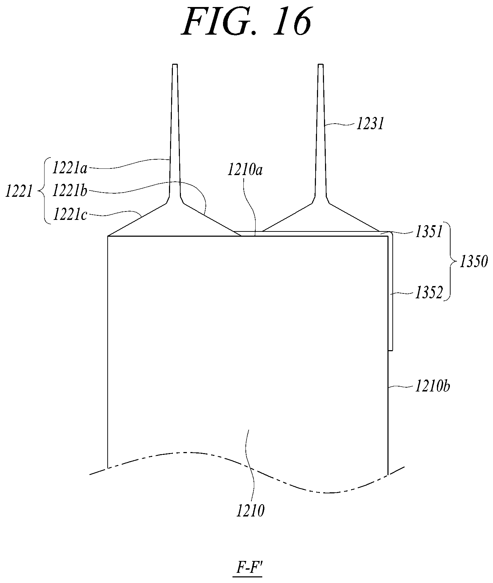

Referring to FIGS. 15A/B and 16, the insulator 1350 may be disposed. The insulator 1350 (as an example of a protective member) may be disposed to cover at least a portion of the electrode assembly 1200. At least a portion of the insulator 1350 may be bent (e.g., onto a lateral side/side surface of the electrode assembly 1200 extending between its bottom and top side). The electrode portion 1210 may include a first electrode surface 1210a (e.g. top surface) and a second electrode surface 1210b (e.g., side surface). The first and second foil tab assemblies 1221 and 1231 may be disposed on the first electrode surface 1210a. The second electrode surface 1210b may extend in a direction intersecting (e.g., at an angle to) the first electrode surface 1210a. The insulator 1350 may include a first insulating portion 1351 and a second insulating portion 1352. The first insulating portion 1351 may cover the first electrode surface 1210a (or a part thereof). The second insulating portion 1352 may cover the second electrode surface 1210b (or a part thereof). The insulator 1350 may include a first insulator 1350a extending toward the first foil tab assembly 1221 and a second insulator 1350b extending toward the second foil tab assembly 1231. The insulator 1350 may cover at least a portion of each of the first and second foil tab assemblies 1221 and 1231. For example, the first insulator 1350a may cover at least a portion of the first-2 assembly portion 1221b, and the second insulator 1350b may cover at least a portion of the second-2 assembly portion 1231b. The first foil tab assembly 1221 may include a first assembly insulation portion 1221b1 that is covered by the insulator 1350. The second foil tab assembly 1231 may include a second assembly insulation portion 1231b1 that is covered by the insulator 1350.

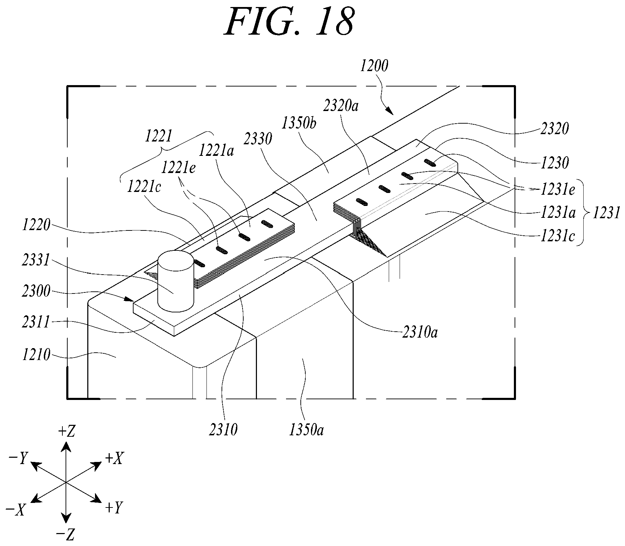

Referring to FIGS. 17A/B and 18, the current collector 2300 may be disposed on the electrode assembly 1200, and the first and second foil tab assemblies 1221 and 1231 may be welded to the current collector 2300. The welding structure described with reference to FIGS. 11A-D and 12A-C may be equally applied to the structure in which the first and second foil tab assemblies 1221 and 1231 are welded to the current collector 2300.

Referring to FIGS. 17A/B and 18, the current collector 2300 may be disposed on the electrode assembly 1200. The current collector 2300 may extend across each of the first foil tab assembly 1221 and the second foil tab assembly 1231. The current collector 2300 may include a first current collecting portion 2310 welded to the first foil tab assembly 1221, and a second current collecting portion 2320 welded to the second foil tab assembly 1231. The current collector 2300 may include a connection portion 2330 positioned between the first current collecting portion 2310 and the second current collecting portion 2320. The current collector 2300 may include a collector edge (or edge portion) 2311. The collector edge 2311 may be disposed at one side of the first current collecting portion 2310. The collector edge 2311 may be located between an edge 1200d of the electrode assembly 1200 and the first and second foil tab assemblies 1221 and 1231. The current collector 2300 may include a current collecting protrusion 2331. The current collecting protrusion 2331 may protrude from the collector edge 2311. The current collecting protrusion 2331 may be positioned between the edge 1200d of the electrode assembly 1200 and the first and second foil tab assemblies 1221 and 1231.

Referring to FIGS. 17A/B and 18, the first foil tab assembly 1221 may be bent toward the first current collecting portion 2310. The first foil tab assembly 1221 may be welded to a first weld surface 2310a (e.g., an upper surface or part thereof) of the first current collecting portion 2310. The second foil tab assembly 1231 may be bent toward the second current collecting portion 2320. The second foil tab assembly 1231 may be welded to a second weld surface 2320a (e.g., an upper surface or part thereof) of the second current collecting portion 2320. The current collector 2300 may include an upper surface 2300b that includes the first weld surface 2310a and the second weld surface 2320a. The first and second foil tab assemblies 1221 and 1231 may be welded to the upper surface 2300b of the current collector 2300.

Referring to FIGS. 17A/B and 18, an end of each of the first and second foil tab assemblies 1221 and 1231 may be spaced apart from an adjacent side surface 2300c of the current collector 2300. For example, after the first and second foil tab assemblies 1221 and 1231 are welded to the current collector 2300, the end of each of the first-1 and second-1 assembly portions 1221a and 1231a may be spaced apart from the adjacent side surface 2300c of the current collector 2300. The end of the first-1 assembly portion 1221a may be spaced apart from the adjacent side surface 2300c of the current collector 2300 by a first distance d5. The end of the second-1 assembly portion 1231a may be spaced apart from the adjacent side surface 2300c of the current collector 2300 by a second distance d6. One or both of the first distance d5 and the second distance d6 may for example be between 0% and 50%, in some examples between 10% and 50%, in some examples between 0% and 25%, in some examples between 10% and 25% and in one example between 0% and 10% of a width of the current collector along the width direction.

Referring to FIGS. 17A/B and 18, the insulators 1350a and 1350b may be placed between the electrode portion 1210 and the current collector 2300. For example, at least a portion of the first insulator 1350a may be placed between the electrode portion 1210 and the first current collecting portion 2310. For example, at least a portion of the second insulator 1350b may be placed between the electrode portion 1210 and the second current collecting portion 2320. Due to the placement of the insulators 1350a and 1350b between the electrode portion 1210 and the current collector 2300, foreign substances generated during welding of the first and second foil tab assemblies 1221 and 1231 to the current collector 2300 may be blocked from being drawn into the inside of the electrode portion 1210. In addition, the placement of the insulators 1350a and 1350b may ensure electrical insulation between the electrode portion 1210 and the assemblies in which the foil tab assemblies 1221 and 1231 are welded to the current collector 2300.

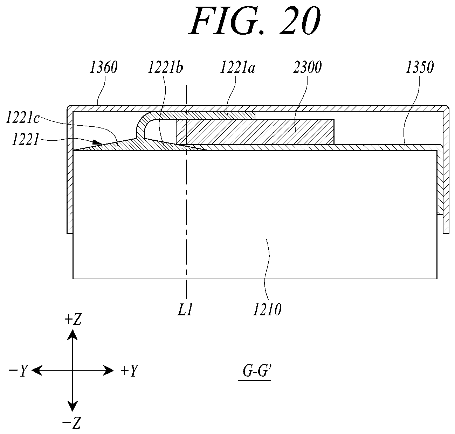

Referring to FIGS. 19 and 20, the cover 1360 may be disposed after completion of the secondary welding. The cover 1360 may cover the foil tab assemblies (e.g., the foil tab assemblies 1221 and 1231 of FIG. 18) and the current collector (e.g., the current collector 2300 of FIG. 18). The cover 1360 may cover at least a portion of the electrode assembly 1200 (e.g., upper portions of side surfaces thereof). The cover 1360 may include an insulating material. The collector edge 2311 and the current collecting protrusion 2331 may be exposed to the outside of the cover 1360. The terminal (e.g., the terminal 1420 or 1420a of FIG. 1) may be coupled to the current collecting protrusion 2331 exposed to the outside of the cover 1360.

Referring to FIGS. 19 and 20, the cover 1360 may cover the electrode portion 1210, the insulator 1350, the current collector 2300, and the foil tab assembly 1221. The cover 1360 may be stacked on each of the electrode portion 1210, the insulator 1350, the current collector 2300, and the foil tab assembly 1221. For example, the electrode portion 1210, the insulator 1350, the current collector 2300, the foil tab assembly 1221, and the cover 1360 may be sequentially stacked in one direction (e.g., the +Z direction). At least a portion of the foil tab assembly 1221 (e.g., the first-2 assembly portion 1221b) may be placed between the electrode portion 1210 and the insulator 1350. On an imaginary line L1 extending in one direction (e.g., the +Z direction), the electrode portion 1210, the first-2 assembly portion 1221b, the insulator 1350, the current collector 2300, the first-1 assembly portion 1221a, and the cover 1360 may be sequentially stacked. Due to the aforementioned structure, the first-1 assembly portion 1221a may be bent in a state in which the first-2 assembly portion 1221b is pressed toward the electrode portion 1210 by the insulator 1350 and the current collector 2300, and thus the bending of the first-1 assembly portion 1221a may be facilitated. Furthermore, due to the aforementioned structure, when the first-1 assembly portion 1221a is welded to the current collector 2300, the insulator 1350 and the first-2 assembly portion 1221b may be located between the current collector 2300 and the electrode portion 1210. Accordingly, foreign substances generated during the welding may be prevented from moving toward the electrode portion 1210.

In the case where the current collector is welded to upper portions of the electrode/foil tabs (as, e.g., in the related art), the current collector is required to be relatively thin to transmit heat to the electrode/foil tabs located under the current collector, thus leading to deterioration in the durability of the secondary battery. However, in the present disclosure, since the plurality of electrode/foil tabs are bent onto and welded to the current collector, a sufficient thickness of the current collector can be secured, and the electrode/foil tabs may be more efficiently welded to the current collector.

Furthermore, in the present disclosure, since the plurality of electrode/foil tabs having the same polarity are divided into two groups and welded, the electrode/foil tabs may be stably welded without any unwelded portions.

In a secondary battery and a method of manufacturing the secondary battery according to an embodiment of the present disclosure, a separator can be prevented from being damaged when a electrode/foil tab is welded to a current collector.

In a secondary battery and a method of manufacturing the secondary battery according to an embodiment of the present disclosure, it is possible to prevent an unwelded portion from occurring in some electrode/foil tabs when a large number of electrode/foil tabs are welded to a current collector.

In a secondary battery and a method of manufacturing the secondary battery according to an embodiment of the present disclosure, after a plurality of foil tabs are primarily welded to one another, the foil tabs may be secondarily welded to the current collector, thereby preventing occurrence of unwelded portions.

In a secondary battery and a method of manufacturing the secondary battery according to an embodiment of the present disclosure, a first foil tab assembly and a second foil tab assembly, which are respectively welded to a first current collecting portion and a second collecting portion of the current collector, may be welded to the current collector at positions spaced apart from each other, thereby preventing interference between the first foil tab assembly and the second foil tab assembly.

While the present disclosure has been described with respect to the specific embodiments, it will be apparent to those skilled in the art that various changes or modifications of the present disclosure are possible by adding, changing, or deleting components without departing from the spirit of the present disclosure as defined in the following claims. It should be noted that these changes or modifications also fall within the scope of the present disclosure.

In view of the above, it will be appreciated that the present invention also provides the following itemized embodiments. Any of these embodiments may additionally comprise any feature or combination of features of the secondary battery as described herein.

Embodiment 1. A secondary battery, comprising:
an electrode assembly comprising an electrode portion, and a plurality of first foil tabs and a plurality of second foil tabs that are formed on one end of the electrode portion; and
a current collector placed on an upper portion of the electrode portion, and comprising a first current collecting portion welded to the plurality of first foil tabs, a second current collecting portion welded to the plurality of second foil tabs, and a connection portion located between the first current collecting portion and the second current collecting portion and provided with a current collecting protrusion,
wherein the plurality of first foil tabs are bent in one direction toward and welded to the first current collecting portion of the current collector, and the plurality of second foil tabs are bent toward and welded to the second current collecting portion of the current collector in a direction opposite to the one direction in which the first foil tabs are bent.

Embodiment 2. The secondary battery according to embodiment 1,
wherein the electrode portion comprises a plurality of first electrode plates formed with the first foil tabs at a first position, and a plurality of second electrode plates formed with the second foil tabs at a second position, and
wherein the first electrode plates and the second electrode plates have a same polarity.

Embodiment 3. The secondary battery according to embodiment 1 or 2, wherein the plurality of first foil tabs and the plurality of second foil tabs are spaced apart from each other in a width direction and a longitudinal direction of the electrode assembly.

Embodiment 4. The secondary battery according to any one of embodiments 1 to 3, wherein the plurality of first foil tabs are pre-welded to one another among the first foil tabs, and the plurality of second foil tabs are pre-welded to one another among the second foil tabs.

Embodiment 5. The secondary battery according to any one of embodiments 1 to 4, wherein the first current collecting portion and the second current collecting portion are arranged in the current collector in a longitudinal direction of the electrode assembly.

Embodiment 6. The secondary battery according to any one of embodiments 1 to 5, wherein the current collector is placed between the plurality of first foil tabs and the plurality of second foil tabs.

Embodiment 7. The secondary battery according to any one of embodiments 1 to 6, wherein an insulator is placed under the current collector.

Embodiment 8. The secondary battery according to any one of embodiments 1 to 7, wherein the current collector has a thickness ranging from 0.5 mm to 3.0 mm.

Embodiment 9. The secondary battery according to any one of embodiments 1 to 8, wherein the current collecting protrusion is formed of a same material as the first current collecting portion and the second current collecting portion.

Embodiment 10. The secondary battery according to any one of embodiments 1 to 9, wherein the current collecting protrusion is formed of a material different from a material of the first current collecting portion and the second current collecting portion.

Embodiment 11. The secondary battery according to any one of embodiments 2 to 10,
wherein the electrode portion comprises separators located between the plurality of first electrode plates and between the plurality of second electrode plates, respectively, and
wherein the electrode assembly is formed by stacking or winding the plurality of first electrode plates, the plurality of second electrode plates, and the separators.

Embodiment 12. The secondary battery according to any one of embodiments 1 to 11, further comprising
a casing having one open end and configured to accommodate the electrode assembly therein; and
a cap assembly coupled to the one open end of the casing, and including an electrode terminal electrically connected to the current collector.

Embodiment 13. The secondary battery according to embodiment 12,
wherein a through hole is formed in the electrode terminal, and
wherein the current collecting protrusion is inserted into the through hole of the electrode terminal.

Embodiment 14. A method of manufacturing a secondary battery, the method comprising:
a preparation operation of preparing an electrode assembly including an electrode portion, and a plurality of first foil tabs and a plurality of second foil tabs that are formed on one end of the electrode portion;
a primary welding operation of welding the plurality of first foil tabs to one another among the first foil tabs, and welding the plurality of second foil tabs to one another among the second foil tabs;
a current collector displacement operation of placing a current collector between the plurality of first foil tabs that are primarily welded and the plurality of second foil tabs that are primarily welded;
a bending operation of bending the plurality of first foil tabs onto an upper surface of a first current collecting portion of the current collector, and bending the plurality of second foil tabs onto an upper surface of a second current collecting portion of the current collector; and
a secondary welding operation of welding the plurality of first foil tabs to the first current collecting portion, and welding the plurality of second foil tabs to the second current collecting portion.

Embodiment 15. The method according to embodiment 14, wherein the plurality of first foil tabs and the plurality of second foil tabs have a same polarity.

Embodiment 16. The method according to embodiment 14 or 15, wherein the first current collecting portion and the second current collecting portion are arranged in the current collector in a longitudinal direction of the electrode assembly.

Embodiment 17. The method according to any one of embodiments 14 to 16, wherein an insulator is placed under the current collector.

Embodiment 18. The method according to any one of embodiments 14 to 18, wherein the current collector includes a current collecting protrusion provided between the first current collecting portion and the second current collecting portion, the current collecting protrusion being formed of a material different from a material of the first current collecting portion and the second current collecting portion.

Embodiment 19. The method according to any one of embodiments 14 to 18, wherein the current collector includes a current collecting protrusion provided between the first current collecting portion and the second current collecting portion, the current collecting protrusion being formed of a same material as the first current collecting portion and the second current collecting portion.

In view of the above, it will further be appreciated that the present invention also provides the following itemized embodiments (referred to and a numbered as examples below). Any of these embodiments may additionally comprise any feature or combination of features of the secondary battery as described herein.

Example 1. A secondary battery, comprising:
a plurality of first electrode plates each including a first foil tab;
a plurality of second electrode plates each including a second foil tab, and having a polarity identical to a polarity of the plurality of first electrode plates;
an electrode assembly including an electrode portion formed by stacking the plurality of first electrode plates and the plurality of second electrode plates, the first foil tabs protruding from the electrode portion, and the second foil tabs protruding from the electrode portion; and
a current collector comprising a first surface facing the electrode portion, and a second surface opposite to the first surface, and including at least a portion located between the first foil tabs and the second foil tabs,
wherein the first foil tabs and the second foil tabs are disposed at offset positions with the current collector interposed therebetween, and are bent toward the second surface and welded to the second surface.

Example 2. The secondary battery according to claim example 1, further comprising:
a first foil tab assembly formed by coupling the respective first foil tabs of the plurality of first electrode plates to each other; and
a second foil tab assembly formed by coupling the respective second foil tabs of the plurality of second electrode plates to each other,
wherein the first foil tab assembly and the second foil tab assembly are welded to the second surface at positions at which the first foil tab assembly and the second foil tab assembly do not overlap each other in a width direction of the current collector.

Example 3. The secondary battery according to example 2, wherein at least a portion of the first foil tab assembly is bent in a direction from a first side of the current collector toward a second side of the current collector, and at least a portion of the second foil tab assembly is bent in a direction from the second side of the current collector toward the first side of the current collector.

Example 4. The secondary battery according to example 2 or 3, wherein the current collector comprises:
a first weld surface forming at least a portion of the second surface; and
a second weld surface forming at least a portion of the second surface, and spaced apart from the first weld surface,
wherein the first foil tab assembly is welded to the first weld surface, and the second foil tab assembly is welded to the second weld surface.

Example 5. The secondary battery according to any one of example 2 to 4,
wherein the first foil tab assembly comprises a first-1 assembly portion including a first assembly weld portion formed by coupling the respective first foil tabs of the plurality of first electrode plates to each other, and
wherein the second foil tab assembly comprises a second-1 assembly portion including a second assembly weld portion formed by coupling the respective second foil tabs of the plurality of second electrode plates to each other.

Example 6. The secondary battery according to any one of examples 2 to 5,
wherein the first foil tab assembly comprises a first-2 assembly portion located between the current collector and the electrode portion, and
wherein the second foil tab assembly comprises a second-2 assembly portion located between the current collector and the electrode portion.

Example 7. The secondary battery according to example 6 or 7, further comprising an insulator including at least a portion located between the current collector and the electrode portion, the insulator covering at least a portion of the first-1 assembly portion and at least a portion of the second-1 assembly portion.

Example 8. The secondary battery according to any one of examples 1 to 7, wherein the current collector comprises a current collecting protrusion formed between the first foil tabs and the second foil tabs.

Example 9. The secondary battery according to any one of examples 1 to 8, wherein the current collector comprises a current collecting protrusion formed between an edge of the electrode assembly and the first and second foil tabs.

Example 10. The secondary battery according to any one of examples 1 to 9, further comprising a cover covering the first and second foil tabs welded to the current collector.

Example 11. A secondary battery, comprising:
a plurality of first electrode plates each including a first foil tab;
a plurality of second electrode plates each including a second foil tab,
an electrode assembly comprising a first stack portion formed by stacking the plurality of first electrode plates, the first stack portion having a width in a first direction and a length in a second direction perpendicular to the first direction, and a second stack portion formed by stacking the plurality of second electrode plates and stacked with the first stack portion in the first direction;
a first foil tab assembly formed in the first stack portion by coupling the respective first foil tabs of the plurality of first electrode plates to each other, the first foil tab assembly being located in a first region among a plurality of regions of the electrode assembly sectioned from each other in the second direction; and
a second foil tab assembly formed in the second stack portion by coupling the respective second foil tabs of the plurality of second electrode plates to each other, the second foil tab assembly being located in a second region different from the first region among the plurality of regions of the electrode assembly sectioned from each other in the second direction.

Example 12. The secondary battery according to example 11, wherein at least a portion of the first foil tab assembly and at least a portion of the second foil tab assembly do not overlap each other in the second direction.

Example 13. The secondary battery according to example 11 or 12, wherein the first foil tab assembly and the second foil tab assembly do not overlap each other in the first direction.

Example 14. The secondary battery according to any one of examples 11 to 13, further comprising a current collector welded to the first foil tab assembly and the second foil tab assembly,
wherein the electrode assembly comprises a bridge portion formed between the first foil tab assembly and the second foil tab assembly that are spaced apart from each other, the bridge portion facing at least a portion of the current collector.

Example 15. The secondary battery according to examples 11 to 14,
wherein the first foil tab assembly comprises a first-1 assembly portion bent toward the second stack portion, and
wherein the second foil tab assembly comprises a second-1 assembly portion bent toward the first stack portion.

Example 16. A secondary battery, comprising:
a plurality of first electrode plates each including a first foil tab;
a first foil tab assembly formed by welding the respective first foil tabs of the plurality of first electrode plates to each other;
a plurality of second electrode plates each including a second foil tab;
a second foil tab assembly formed by welding the respective second foil tabs of the plurality of second electrode plates to each other; and
a current collector to which the first foil tab assembly and the second foil tab assembly are welded,
wherein the first foil tab assembly comprises:
   a first assembly weld portion formed by welding the respective first foil tabs of the plurality of first electrode plates to each other; and
   a first current collector weld portion formed by being welded to the current collector, and
   wherein the second foil tab assembly comprises:
      a second assembly weld portion formed by welding the respective second foil tabs of the plurality of second electrode plates to each other; and
      a second current collector weld portion formed by being welded to the current collector,

Example 17. The secondary battery according to example 16,
wherein the first foil tab assembly comprises a first-1 assembly portion in which the first assembly weld portion and the first current collector weld portion are formed, and
wherein the second foil tab assembly comprises a second-1 assembly portion in which the second assembly weld portion and the second current collector weld portion are formed.

Example 18. The secondary battery according to example 16 or 17, further comprising an electrode assembly formed by stacking the plurality of first electrode plates and the plurality of second electrode plates,
wherein the first foil tab assembly comprises a first-2 assembly portion located between the first current collector weld portion and the electrode assembly, and
wherein the second foil tab assembly comprises a second-2 assembly portion located between the second current collector weld portion and the electrode assembly.

Example 19. The secondary battery according to example 18, wherein the current collector comprises:
a first current collecting portion located between the first current collector weld portion and the first-2 assembly portion; and
a second current collecting portion located between the second current collector weld portion and the second-2 assembly portion.

Example 20. The secondary battery according to examples 16 to 19, further comprising an electrode assembly formed by stacking the plurality of first electrode plates and the plurality of second electrode plates,
wherein the current collector comprises:
a lower surface facing the electrode assembly;
a first weld surface facing in a direction opposite to the lower surface, and on which the first assembly weld portion and the first current collector weld portion are joined; and
a second weld surface facing in the direction opposite to the lower surface, and on which the second assembly weld portion and the second current collector weld portion are joined.

## Claims

1. A secondary battery (1000), comprising:
an electrode assembly (1200) comprising an electrode portion (1210), and a plurality of first electrode tabs (1220, 1240) and a plurality of second electrode tabs (1230, 1250) that are formed at a first side of the electrode portion (1210); and
a current collector (1300) placed at the first side of the electrode portion (1210), and comprising a first current collecting portion (1310) connected to the plurality of first electrode tabs (1220, 1240) and a second current collecting portion (1320) connected to the plurality of second electrode tabs (1230, 1250),
wherein:
the plurality of first electrode tabs (1220, 1240) are bent in a first direction toward and connected onto an upper surface of the first current collecting portion (1310) of the current collector (1300) facing away from the electrode portion (1210),
the plurality of second electrode tabs (1230, 1250) are bent toward and connected onto an upper surface of the second current collecting portion (1320) of the current collector (1300) facing away from the electrode portion (1210), wherein the plurality of second electrode tabs (1230, 1250) are bent in a direction opposite to the first direction in which the first electrode tabs (1230, 1250) are bent, and
the plurality of first electrode tabs (1220, 1240) and the plurality of second electrode tabs (1230, 1250) are spaced apart from each other at least in a second direction perpendicular to the first direction.

2. The secondary battery (1000) according to claim 1,
wherein the electrode portion (1210) comprises a plurality of first electrode members (1211) formed with the first electrode tabs (1220, 1240) at a first position along the second direction, and a plurality of second electrode members (1212) formed with the second electrode tabs (1230, 1250) at a second position along the second direction,
in particular wherein the first electrode plates (1211) and the second electrode plates (1212) have a same polarity.

3. The secondary battery (1000) according to claim 1 or 2, wherein the plurality of first electrode tabs (1220, 1240) and the plurality of second electrode tabs (1230, 1250) are spaced apart from each other in the first direction and in the second direction.

4. The secondary battery (1000) according to any one of the preceding claims, wherein: the plurality of first electrode tabs (1220, 1240) extend at the upper surface of the first current collecting portion (1310) across at least 50%, preferably at least 75%, most preferably at least 90% of a width of the current collector (1300) in the first current collecting portion (1310) along the first direction; and/or
the plurality of second electrode tabs (1230, 1250) extend at the upper surface of the second current collecting portion (1320) across at least 50%, preferably at least 75%, most preferably at least 90% of the width of the current collector (1300) in the second current collecting portion (1320) along the first direction.

5. The secondary battery (1000) according to any one of the preceding claims, wherein the first current collecting portion (1310) is welded to the plurality of first electrode tabs (1220, 1240) and/or the second current collecting portion (1320) is welded to the plurality of second electrode tabs (1230, 1250).

6. The secondary battery (1000) according to any one of the preceding claims, wherein the plurality of first electrode tabs (1220, 1240) have been pre-welded to one another among the first electrode tabs (1220, 1240) prior to connecting the first current collecting portion (1310) to the plurality of first electrode tabs (1220, 1240), and/or the plurality of second electrode tabs (1230, 1250) have been pre-welded to one another among the second electrode tabs (1230, 1250) prior to connecting the second current collecting portion (1320) to the plurality of second electrode tabs (1230, 1250).

7. The secondary battery (1000) according to claim 6, wherein for one or both of the plurality of first electrode tabs (1220, 1240) and the plurality of second electrode tabs (1230, 1250):
the respective plurality of electrode tabs (1220-1250) have been pre-welded to one another at one or more pre-welding areas and the first and second current collecting portion (1320), respectively, is welded to the respective plurality of electrode tabs (1220-1250) at one or more welding areas, wherein at least parts of the one or more pre-welding areas do not overlap with any of the one or more welding areas, in particular wherein some or all of the one or more pre-welding areas extend perpendicularly or substantially perpendicularly to some or all of the one or more welding areas.

8. The secondary battery (1000) according to claim 6 or 7, wherein one or both of the plurality of first electrode tabs (1220, 1240) and the plurality of second electrode tabs (1230, 1250) comprise a pre-welded portion in which the respective plurality of electrode tabs (1220-1250) have been pre-welded to one another, said pre-welded portion being arranged along a side surface of the first and second current collecting portion (1310, 1320), respectively, and/or between the electrode portion (1210) and a bottom surface of the first and second current collecting portion (1310, 1320), respectively.

9. The secondary battery (1000) according to any one of the preceding claims, wherein a protective member (1340) is arranged between the current collector (1300) and the electrode portion (1210).

10. The secondary battery (1000) according to any one of the preceding claims, wherein the current collector (1300) comprises a connection portion (1330) located between the first current collecting portion (1310) and the second current collecting portion (1320), in particular wherein the connection portion (1330) is provided with a protrusion (1331) protruding from the connection portion (1330) for electrically connecting the current collector (1300) to an electrode terminal (1420).

11. The secondary battery (1000) according to claim 10, wherein the protrusion (1331) is formed of a same material as one or both of the first current collecting portion (1310) and the second current collecting portion (1320), in particular wherein the protrusion (1331) is integrally formed with one or both of the first current collecting portion (1310) and the second current collecting portion (1320).

12. The secondary battery (1000) according to claim 10 or 11, wherein the protrusion (1331) is formed of a material different from a material of the first current collecting portion (1310) and/or a material of the second current collecting portion (1320).

13. The secondary battery (1000) according to any one of claims 10 to 12, wherein:
the secondary battery (1000) comprises an electrode terminal (1420) electrically connected to the current collector (1300) by the protrusion (1331),
a hole, in particular a through hole, is formed in the electrode terminal, and
the protrusion (1331) is arranged in the hole of the electrode terminal (1420).

14. A method of manufacturing a secondary battery (1000), the method comprising:
preparing an electrode assembly (1200) including an electrode portion (1210), and a plurality of first electrode tabs (1220, 1240) and a plurality of second electrode tabs (1230, 1250) that are formed at a first side of the electrode portion (1210), wherein the plurality of first electrode tabs (1220, 1240) and the plurality of second electrode tabs (1230, 1250) are spaced apart from each other at least in a displacement direction;
placing a current collector (1300) at the first side of the electrode portion (1210) between the plurality of first electrode tabs (1220, 1240) and the plurality of second electrode tabs (1230, 1250);
bending the plurality of first electrode tabs (1220, 1240) in a bending direction onto an upper surface of a first current collecting portion (1310) of the current collector (1300) facing away from the electrode portion (1210), and bending the plurality of second electrode tabs (1230, 1250) in a direction opposite to the bending direction onto an upper surface of a second current collecting portion (1320) of the current collector (1300) facing away from the electrode portion (1210), wherein the bending direction is perpendicular to the displacement direction; and
connecting the plurality of first electrode tabs (1220, 1240) to the first current collecting portion (1310), and connecting the plurality of second electrode tabs (1230, 1250) to the second current collecting portion (1320).

15. The method of claim 14, wherein the plurality of first electrode tabs (1220, 1240) and the plurality of second electrode tabs (1230, 1250) are spaced apart from each other in the displacement direction and in the bending direction.

16. The method of claim 14 or 15, wherein one or both of the plurality of first electrode tabs (1220, 1240) and the plurality of second electrode tabs (1230, 1250) are connected to the first and second current collecting portion (1310, 1320), respectively, by welding.

17. The method of any one of claims 14 to 16, further comprising one or both of:
pre-welding the plurality of first electrode tabs (1220, 1240) to one another among the first electrode tabs (1220, 1240) prior to connecting the first current collecting portion (1310) to the plurality of first electrode tabs (1220, 1240); and
pre-welding the plurality of second electrode tabs (1230, 1250) to one another among the second electrode tabs (1230, 1250) prior to connecting the second current collecting portion (1320) to the plurality of second electrode tabs (1230, 1250),
in particular wherein one or both of the plurality of first electrode tabs (1220, 1240) and the plurality of second electrode tabs (1230, 1250) are pre-welded prior to placing the current collector (1300) between the plurality of first electrode tabs (1220, 1240) and the plurality of second electrode tabs (1230, 1250),

18. The method of claim 17, wherein the method further comprises cutting the plurality of first electrode tabs (1220, 1240) to a same length after pre-welding the plurality of first electrode tabs (1220, 1240) to one another and/or cutting the plurality of second electrode tabs (1230, 1250) to a same length after pre-welding the plurality of second electrode tabs (1230, 1250) to one another.

19. The method according to any one of claims 14 to 18, wherein the plurality of first electrode tabs (1220, 1240) and the plurality of second electrode tabs (1220, 1240) are associated with a same polarity.

20. The method according to any one of claims 14 to 19, wherein a protective member (1340) is placed between the current collector (1300) and the electrode portion (1210).

21. The method according to any one of claims 14 to 20, wherein the current collector (1300) includes a protrusion (1331) provided between the first current collecting portion (1310) and the second current collecting portion (1320) for electrically connecting the current collector (1300) to an electrode terminal (1420), in particular wherein:
the protrusion (1331) is formed of a material different from a material of the first current collecting portion (1310) and/or a material of the second current collecting portion (1320); and/or
the protrusion (1331) is formed of a same material as one or both of the first current collecting portion (1310) and the second current collecting portion (1320), in particular wherein the protrusion (1331) is integrally formed with one or both of the first current collecting portion (1310) and the second current collecting portion (1320).
